(19) Europäisches Patentamt
European Patent Office
Office européen des brevets

(11) **EP 4 682 218 A1**

(12) **EUROPEAN PATENT APPLICATION**
published in accordance with Art. 153(4) EPC

(43) Date of publication:
**21.01.2026 Bulletin 2026/04**

(21) Application number: **24770993.4**

(22) Date of filing: **15.03.2024**

(51) International Patent Classification (IPC):
**C09K 3/10** $^{(2006.01)}$    **B60C 1/00** $^{(2006.01)}$
**C08F 297/04** $^{(2006.01)}$

(52) Cooperative Patent Classification (CPC):
**B60C 1/00; C08F 297/04; C09K 3/10**

(86) International application number:
**PCT/JP2024/010150**

(87) International publication number:
**WO 2024/190891 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.03.2023 JP 2023042005**

(71) Applicant: **Nitto Denko Corporation**
**Osaka 567-8680 (JP)**

(72) Inventors:
• **KITAHARA, Tsunaki**
**Ibaraki-shi, Osaka 567-8680 (JP)**
• **HAYASHI, Yohei**
**Ibaraki-shi, Osaka 567-8680 (JP)**
• **YAMANOKUCHI, Shogo**
**Ibaraki-shi, Osaka 567-8680 (JP)**
• **NAKASHIMA, Kurato**
**Ibaraki-shi, Osaka 567-8680 (JP)**

(74) Representative: **Grünecker Patent- und**
**Rechtsanwälte**
**PartG mbB**
**Leopoldstraße 4**
**80802 München (DE)**

(54) **SEAL SHEET FOR PNEUMATIC TIRES**

(57)    A pneumatic tire sealing sheet according to the present invention includes a sealant layer. When $G'_1$ represents a storage elastic modulus value at -20 °C of the sealant layer, T represents a probe tack value at 23 °C of the sealant layer, and A1 represents an adhesive strength value at 23 °C of the sealant layer to a tire, a ratio of a product of the probe tack value T and the adhesive strength value A1 to the storage elastic modulus value $G'_1$ ($A1 \times T / G'_1$) is 12.0 or less.

**EP 4 682 218 A1**

## Description

CROSS-REFERENCE TO RELATED APPLICATION

This application claims priority to Japanese Patent Application No. 2023-042005, the disclosure of which is incorporated herein by reference in its entirety.

FIELD

The present invention relates to a pneumatic tire sealing sheet. More specifically, the present invention relates to a pneumatic tire sealing sheet for preventing a pneumatic tire from being punctured.

BACKGROUND

Conventionally, many vehicles such as bicycles and motorcycles are equipped with wheel assemblies fitted with pneumatic tires.

When such a vehicle is travelling on a road surface on which a foreign object with a sharp tip (e.g., nail, shard of glass) is present, the foreign object with the sharp tip may puncture the pneumatic tire to form a through hole therein. The through hole formed in the pneumatic tire causes air filled in the pneumatic tire to be leaked out therethrough, possibly resulting in the pneumatic tire going flat. The vehicle with the flat pneumatic tire fails to smoothly travel on the road surface, which is not preferable.

To suppress air leakage through the through hole, therefore, known is forming a sealant layer by applying a sealant composition to an inner surface of the pneumatic tire (e.g., Patent Literature 1 below).

Patent Literature 1 below discloses that a curable liquid agent such as latex is used as the sealant composition for forming the sealant layer.

CITATION LIST

Patent Literature

Patent Literature 1: US 2003/0136490 A

Summary

Technical Problem

When the sealant layer made of the curable liquid agent as above is used to suppress the air leakage through the through hole, there may be a case where the sealant layer has a degraded sealability at the through hole over time. There is accordingly a demand for a sealing sheet including a sealant layer capable of suppressing the sealability at the through hole from being degraded over time, but the demand has yet to be sufficiently satisfied.

It is therefore an object of the present invention to provide a pneumatic tire sealing sheet capable of suppressing sealability from being degraded over time at a through hole in the pneumatic tire.

Solution to Problem

The present inventors have found upon thorough examination that, when $G'_1$ represents a storage elastic modulus value at -20 °C of the sealant layer, T represents a probe tack value at 23 °C of the sealant layer, and A1 represents an adhesive strength value at 23 °C of the sealant layer to a tire, a ratio of a product of the probe tack value T and the adhesive strength value A1 to the storage elastic modulus value $G'_1$ ($A1 \times T / G'_1$) should be set to 12.0 or less, so that the sealability of the pneumatic tire sealing sheet including the sealant layer can be suppressed from being degraded over time at the through hole in the pneumatic tire. The present invention has been thus conceived.

That is, a pneumatic tire sealing sheet according to the present invention includes a sealant layer, in which, when $G'_1$ represents a storage elastic modulus value at -20 °C of the sealant layer, T represents a probe tack value at 23 °C of the sealant layer, and A1 represents an adhesive strength value at 23 °C of the sealant layer to a tire, a ratio of a product of the probe tack value T and the adhesive strength value A1 to the storage elastic modulus value $G'_1$ ($A1 \times T/G'_1$) is 12.0 or less.

BRIEF DESCRIPTION OF DRAWINGS

Fig. 1 is a cross-sectional view showing a configuration of a pneumatic tire sealing sheet according to one embodiment of the present invention.

Fig. 2 is a cross-sectional view showing a configuration of a pneumatic tire sealing sheet according to another embodiment of the present invention.

Fig. 3 is a cross-sectional view showing a configuration of a pneumatic tire sealing sheet according to still another embodiment of the present invention.

Fig. 4 is a cross-sectional view showing a configuration of a pneumatic tire sealing sheet according to yet another embodiment of the present invention.

Fig. 5 is a schematic view showing a wheel assembly of a bicycle.

Fig. 6 is a schematic view showing a state where the wheel assembly of the bicycle has been cut along a plane direction orthogonal to a circumferential direction of the wheel assembly (i.e., cross-sectional view as viewed from arrow VI-VI in Fig. 5).

Fig. 7A is a schematic view showing a state where a nail has been stuck in a pneumatic tire equipped with a pneumatic tire sealing sheet according to one embodiment of the present invention (i.e., enlarged view of portion A in Fig. 6).

Fig. 7B is a cross-sectional view showing a state where the nail has been removed from the pneumatic tire equipped with the pneumatic tire sealing sheet according to one embodiment of the present invention (i.e., enlarged view of portion A in Fig. 6).

DESCRIPTION OF EMBODIMENTS

(Pneumatic tire sealant composition)

A description will be hereinafter given on a pneumatic tire sealant composition according to one embodiment of the present invention. The one embodiment of the present invention will be hereinafter abbreviated as this embodiment. The pneumatic tire sealant composition according to this embodiment is used for forming a sealant layer of a pneumatic tire sealing sheet according to each embodiment to be described later.

The pneumatic tire sealant composition according to this embodiment preferably includes, as an organic component, a thermoplastic elastomer. Examples of the thermoplastic elastomer include a styrene-based thermoplastic elastomer and an acrylic thermoplastic elastomer.

Examples of the styrene-based thermoplastic elastomer include a styrene-ethylene-butadiene-styrene block copolymer (SEBS), a styrene-isoprene-styrene block copolymer (SIS), a styrene-isobutylene-styrene block copolymer (SIBS), a styrene-butadiene-styrene block copolymer (SBS), and a styrene-ethylene-propylene-styrene block copolymer (SEPS). Examples of the acrylic thermoplastic elastomer include a copolymer of an acrylate ester and 2-chloroethylvinyl ether, a copolymer of an acrylate ester and acrylonitrile, and a copolymer of an acrylate ester and an acrylic acid. Among the above, the pneumatic tire sealant composition preferably includes, as the thermoplastic elastomer, the styrene-based thermoplastic elastomer, and more preferably includes, among those styrene-based thermoplastic elastomers above, at least one of the styrene-isoprene-styrene block copolymer (SIS) and the styrene-isobutylene-styrene block copolymer (SIBS).

The thermoplastic elastomer has a mass average molecular weight of preferably 20,000 or more and 1,500,000 or less. The mass average molecular weight can be obtained as a conversion value of a standard polystyrene from the GPC (gel permeation chromatography) measurement. The mass average molecular weight of the thermoplastic elastomer can be determined by measuring a specimen obtained as follows, using TOSOH's HLC-8420GPC under the following conditions:

[How to obtain a specimen]

(1) A sample taken from the pneumatic tire sealant composition including the thermoplastic elastomer is prepared in a 1.0 g/L THF solution and let stand overnight.

(2) The THF solution let stand overnight is filtered by a membrane filter with a pore diameter of 0.45 $\mu$m to obtain a filtrate as a specimen.

[Conditions for GPC measurement]

- Column: TSKgel SuperHZM-H, TSKgel SuperHZ4000, TSKgel SuperHZ3000, and TSKgel SuperHZ200 (all manufactured by TOHSOH) are serially connected by a method using ferrules.
- Column size: 6.0 mm I.D. × 150 mm for each column
- Eluent: THF
- Flow rate: 0.6 mL/min
- Column temperature: 40 °C
- Detector: RI
- Injection volume: 20 μL

The styrene-based thermoplastic elastomer has a diblock ratio of preferably 10% or more, more preferably 20% or more. The styrene-based thermoplastic elastomer has a diblock ratio of preferably 80% or less. Further, the styrene-based thermoplastic elastomer has a diblock ratio of preferably 40% or more, particularly preferably 50% or more. When the styrene-based thermoplastic elastomer is the styrene-isobutylene-styrene copolymer (SIBS), the diblock ratio thereof is particularly preferably 20% or more. The diblock ratio of the styrene-based thermoplastic elastomer falling within the above numerical range enables the pneumatic tire sealant composition to exhibit more sufficient adhesiveness over a wide temperature range from low temperature (e.g., -10 °C) to high temperature (e.g., 60 °C).

The diblock ratio (%) can be calculated by the following formula:

Diblock ratio (%) = Mass parts of diblock copolymer / (Mass parts of diblock copolymer + Mass parts of triblock copolymer) × 100

Specifically, the diblock ratio can be calculated from an area ratio between a peak area attributed to the diblock copolymer and a peak area attributed to the triblock copolymer in a chart obtained by measuring the molecular weight of the styrene-based thermoplastic elastomer by the gel permeation chromatography (GPC) method. The GPC method can be performed in the same manner as described in the method for measuring the mass average molecular weight of the thermoplastic elastomer.

A styrene content (amount of styrene) in the styrene-based thermoplastic elastomer is preferably 10 mass % or more, more preferably 13 mass % or more, further preferably 15 mass % or more. The styrene content in the styrene-based thermoplastic elastomer is preferably 40 mass % or less, more preferably 30 mass % or less, further preferably 25 mass % or less.

Examples of the method for adjusting the diblock ratio in the styrene-based thermoplastic elastomer include changing an amount ratio between the amount of a polymerization initiator and the amount of a coupling agent used for polymerization (amount of coupling agent / amount of polymerization initiator).

The pneumatic tire sealant composition preferably includes, as the organic component, one of a softener and a tackifier. Further, the pneumatic tire sealant composition can include, e.g., an aging inhibitor.

Examples of the softener include paraffins, waxes, naphthenes, aromas, asphalts, dry oils (e.g., linseed oil), animal and plant oils, petroleum-based oils (e.g., process oils), polybutenes, polyisobutylenes, ethylene and α-olefin co-oligomers, low molecular weight polyethylene glycols, phthalates, phosphates, stearic acids or esters thereof, and alkyl sulfonates. These softeners can be individually used, or two or more of them can be used in combination. The pneumatic tire sealant composition preferably includes polybutene as the softener.

The pneumatic tire sealant composition includes preferably 10 mass parts or more, more preferably 20 mass parts or more, further preferably 40 mass parts or more, of the softener based on 100 mass parts of the thermoplastic elastomer. The pneumatic tire sealant composition includes preferably 150 mass parts or less, more preferably 130 mass parts or less, further preferably 110 mass parts or less, of the softener based on 100 mass parts of the thermoplastic elastomer.

Examples of the tackifier include a rosin-based resin, a terpene-based resin, a styrene-based resin, a petroleum-based resin, a phenol-based resin, and a hydrogenated resin of any of these resins. These tackifiers can be individually used, or two or more of them can be used in combination.

Examples of the rosin-based resin include a rosin resin, a rosin ester resin, and a rosin phenol resin. The terpene-based resin can be a compound having a constituent unit derived from isoprene, and examples thereof include a terpene resin, an aromatic modified terpene resin, and a terpene phenolic resin. Examples of the styrene-based resin include a resin obtained by copolymerizing a styrene-based monomer such as α-methylstyrene or β-methylstyrene with an aliphatic monomer. Examples of the petroleum-based resin include a C5 hydrocarbon resin obtained by copolymerizing C5 fractions such as pentene, isoprene, piperine, or 1,3-pentadiene resulting from the thermal decomposition of petroleum naphtha; and a C9 hydrocarbon resin (aromatic petroleum resin) obtained by copolymerizing C9 fractions such as indene or vinyltoluene resulting from the thermal decomposition of petroleum naphtha. Examples of the phenolic resin include an alkylphenolic resin, a xylylene formaldehyde resin, resol, and novolac.

The pneumatic tire sealant composition preferably includes, as the tackifier, at least one selected from the group consisting of a rosin-based resin, a terpene-based resin, and a petroleum-based resin. The pneumatic tire sealant composition includes preferably 50 mass parts or more, more preferably 70 mass parts or more, further preferably 90 mass parts or more, of the tackifier based on 100 mass parts of the thermoplastic elastomer. The pneumatic tire sealant composition includes preferably 400 mass parts or less, more preferably 380 mass parts or less, further preferably 350 mass parts or less, still further preferably includes 140 mass parts or less, of the tackifier based on 100 mass parts of the thermoplastic elastomer.

The pneumatic tire sealant composition preferably includes, as the tackifier, the rosin ester resin, the C9 hydrocarbon resin (aromatic petroleum resin), and the terpene resin. When the pneumatic tire sealant composition includes the tackifier having such a combination, the terpene resin is included in an amount of preferably 40 mass parts or more, more preferably 50 mass parts or more, further preferably 70 mass parts or more, based on 100 mass parts of the thermoplastic elastomer. The terpene resin is included in an amount of preferably 110 mass parts or less, more preferably 100 mass parts or less, further preferably 90 mass parts or less, based on 100 mass parts of the thermoplastic elastomer. In the case as above, the C9 hydrocarbon resin (aromatic petroleum resin) is included in an amount of preferably 5 mass parts or more, more preferably 7 mass parts or more, based on 100 mass parts of the thermoplastic elastomer. The C9 hydrocarbon resin (aromatic petroleum resin) is included in an amount of preferably 15 mass parts or less, more preferably 12 mass parts or less, further preferably 9 mass parts or less, based on 100 mass parts of the thermoplastic elastomer. In the case as above, the rosin ester resin is included in an amount of preferably 10 mass parts or more, more preferably 15 mass parts or more, and further preferably 18 mass parts or more, based on 100 mass parts of the thermoplastic elastomer. The rosin ester resin is included in an amount of preferably 30 mass parts or less, more preferably 25 mass parts or less, further preferably 22 mass parts or less, based on 100 mass parts of the thermoplastic elastomer.

Further, the pneumatic tire sealant composition can include only a C5 hydrocarbon resin as the tackifier. In such a case, the C5 hydrocarbon resin is included in an amount of preferably 80 mass parts or more, more preferably 100 mass parts or more, further preferably 120 mass parts or more, based on 100 mass parts of the thermoplastic elastomer. The pneumatic tire sealant composition includes preferably 200 mass parts or less, more preferably 180 mass parts or less, further preferably 160 mass parts or less, still further preferably 140 mass parts or less, of the C5 hydrocarbon resin based on 100 mass parts of the thermoplastic elastomer. When the pneumatic tire sealant composition includes, as the tackifier, only the C5 hydrocarbon resin, it is preferable that the pneumatic tire sealant composition further include the softener.

The pneumatic tire sealant composition can include, as the tackifier, a copolymer resin of the C5 hydrocarbon and the C9 hydrocarbon (aromatic hydrocarbon). In such a case, the copolymer resin is included in a total amount of preferably 40 mass parts or more, more preferably 60 mass parts or more, further preferably 80 mass parts or more, based on 100 mass parts of the thermoplastic elastomer. The copolymer resin is included in a total amount of preferably 400 mass parts or less, more preferably 300 mass parts or less, further preferably 250 mass parts or less, based on 100 mass parts of the thermoplastic elastomer.

A description will be given in more detail on the thermoplastic elastomer, the softener, and the tackifier. When the thermoplastic elastomer is the styrene-isoprene-styrene copolymer (SIS) and has a diblock ratio of 40% or more, the sealant layer tends to have both a high probe tack value and a high adhesive strength, but tends to have a decreased storage elastic modulus. In this case, therefore, it is preferable that the sealant composition have the tackifier. This configuration enables the sealant layer to have a high storage elastic modulus, specifically 0.5 MPa or more, which is a preferable storage elastic modulus value at -20 °C. When the thermoplastic elastomer is the styrene-isoprene-styrene copolymer (SIS) and has a diblock ratio of 30% or less, the sealant layer tends to have a high storage elastic modulus, but tends to have a decreased probe tack value and a decreased adhesive strength. In this case, therefore, it is preferable that the sealant composition include both the tackifier and the softener. This configuration enables the sealant layer to have an increased probe tack value and an increased adhesive strength, specifically a probe tack value at 23 °C of 0.05 MPa or more, which is a preferable value, and an adhesive strength at 23 °C to the tire of 1.0 N / 20 mm or more being a preferable value. When the thermoplastic elastomer is the styrene-isobutylene-styrene copolymer (SIBS), the sealant layer can have a preferable probe tack value, adhesive strength, and storage elastic modulus; thus, the sealant composition can be made of the styrene-isobutylene-styrene copolymer (SIBS). Preferably, the sealant composition can include the softener along with the styrene-isobutylene-styrene copolymer (SIBS) to increase the adhesive strength of the sealant composition while decreasing its storage elastic modulus.

Various known aging inhibitors can be used. Examples of the aging inhibitor include a phosphorus aging inhibitor, a phenolic aging inhibitor, a hindered amine-based aging inhibitor, benzotriazole-based aging inhibitor, an aromatic amine-based aging inhibitor, and a sulfur-based aging inhibitor.

The pneumatic tire sealant composition can include one of the above aging inhibitors, or can include two or more of the above aging inhibitors. The pneumatic tire sealant composition including the aging inhibitor(s) can suppress the thermoplastic elastomer in the pneumatic tire sealant composition from being oxidized and deteriorated.

The pneumatic tire sealant composition includes preferably 1 mass part or more of the aging inhibitor based on 100 mass parts of the thermoplastic elastomer. The pneumatic tire sealant composition can include 2 mass parts or more, can include 3 mass parts or more, of the aging inhibitor based on 100 mass parts of the thermoplastic elastomer. Further, the pneumatic tire sealant composition can include 10 mass parts or less, can include 8 mass parts or less, can include 6 mass parts or less, of the aging inhibitor based on 100 mass parts of the thermoplastic elastomer.

The pneumatic tire sealant composition can include an inorganic component. The pneumatic tire sealant composition can include, as the inorganic component, an inorganic filler and an inorganic colorant. The pneumatic tire sealant composition preferably includes, as the inorganic component, the inorganic filler.

Examples of the inorganic filler include calcium carbonate (e.g., heavy calcium carbonate, light calcium carbonate), calcium stearate, talc, titanium oxide, silica, and magnesium oxide. It is preferable to use calcium carbonate among these, and it is preferable to use heavy calcium carbonate among the calcium carbonate. The calcium stearate functions also as a lubricant.

The pneumatic tire sealant composition includes preferably 0.1 mass part or more, more preferably 0.2 mass part or more, further preferably 0.4 mass part or more, of the inorganic filler based on 100 mass parts of the thermoplastic elastomer. The pneumatic tire sealant composition includes preferably 10 mass parts or less, more preferably 5 mass parts or less, further preferably 1 mass part or less, of the inorganic filler based on 100 mass parts of the thermoplastic elastomer.

Used as the inorganic colorant is preferably carbon, more preferably carbon black.

The pneumatic tire sealant composition preferably includes the inorganic colorant in a range between 1 mass part or more and 10 mass parts or less based on 100 mass parts of the thermoplastic elastomer.

As will be shown in the later Examples section, a kind of the thermoplastic elastomers, a kind of the tackifiers, a kind of the softeners, and a kind of the inorganic fillers are appropriately selected and combined to appropriately adjust the mixing amount of each of the components, so that a ratio of a product of the probe tack value T and the adhesive strength A1 to the storage elastic modulus value $G'_1$ ($A1 \times T / G'_1$) can be suitably adjusted to 12.0 or less in the sealant layer made of the pneumatic tire sealant composition.

(Pneumatic tire sealing sheet)

The pneumatic tire sealing sheet according to this embodiment includes the sealant layer.

In the pneumatic tire sealing sheet according to this embodiment,

where $G'_1$ represents the storage elastic modulus value at -20 °C of the sealant layer,
T represents the probe tack value at 23 °C of the sealant layer, and
A1 represents the adhesive strength value at 23 °C of the sealant layer to the tire,
a ratio of a product of the probe tack value T and the adhesive strength value T to the storage elastic modulus value $G'_1$
($A1 \times T/G'_1$) is 12.0 or less.

As has been described above, in the pneumatic tire sealing sheet according to this embodiment, the sealant layer is made of the pneumatic tire sealant composition according to this embodiment.

With the above relationship satisfied, the pneumatic tire sealing sheet according to this embodiment with the sealant layer attached to the inner surface of the pneumatic tire enables a part of the sealant layer to suitably fill a through hole formed in the pneumatic tire when a foreign object with a sharp tip (e.g., nail, shard of glass) stuck in the pneumatic tire is removed from the pneumatic tire. Consequently, air inside the pneumatic tire can be suitably suppressed from leaking out. That is, the pneumatic tire sealing sheet according to this embodiment includes the sealant layer capable of exhibiting good sealability.

The storage elastic modulus value $G'_1$ at -20 °C of the sealant layer can be measured using a dynamic viscoelasticity measuring apparatus (trade name "ARES-G2" manufactured by TA Instruments). As a measurement sample, the sealant layer having a plane dimension of $\varphi$8 mm and a thickness of 1.0 mm can be used. The measurement sample can be obtained by punching the sealant layer with a thickness of 1.0 mm using a jig into a piece having a plane dimension of $\varphi$8 mm. The following measurement conditions are employed.

[Measurement conditions]

- Probe: $\varphi$8 mm
- Deformation mode: Sine wave

- Frequency: 1 Hz
- Temperature rising rate: 5 °C/min
- Measurement temperature: -60 °C to 150 °C

$G'_1$ can be obtained by reading the storage elastic modulus value at -20 °C from the obtained data.

The probe tack value T at 23 °C can be measured using a probe tack measuring machine (trade name "TACKINESS Model TAC-II" manufactured by RHESCA CO., LTD). The measurement sample can be obtained by punching the sealant layer with a thickness of 1.0 mm into a piece having a plane dimension of 20 mm × 40 mm. The measurement steps are as follows.

(1) One side of the measurement sample (plane dimension of 20 mm × 40 mm) is attached to one side of a piece of slide glass (plane dimension of 26 mm × 76 mm manufactured by Matsunami Glass Ind., Ltd.) using a double-sided adhesive tape (trade name "No. 5610" manufactured by Nitto Denko Corporation). A 2 kg hand roller is used for the attaching.

(2) A probe tack value is measured for an exposed surface of the measurement sample using the probe tack measuring machine. The following measurement conditions are employed. The probe tack value is measured in an environment at 23 °C.

[Measurement conditions]

- Measurement mode: Static probe mode
- Probe terminal: 5 mmφ SUS probe terminal
- Probe immersion speed: 120 mm/min
- Test speed: 120 mm/min
- Preload: 100 gf
- Press time: 1 sec

The measurement is performed at any five points in the exposed surface of the measurement sample. Then, the obtained five measured values are arithmetically averaged to obtain the probe tack value T.

The adhesive strength value A1 can be measured as follows. Used as a measurement tire is a tubeless tire manufactured by Inoue Rubber Co., Ltd. (Formula Pro Hookless Tubeless RBCC 700 × 25C). In the Examples below, a tubeless tire with the manufacturer model number 190636 was used.

(1) An adhesive strength measurement test piece being a small piece with a width of 20 mm is cut out of the sealant layer having a thickness of 0.5 mm.

(2) A polyethylene terephthalate (PET) resin film (25 μm thick) is attached to one side of the adhesive strength measurement test piece to obtain a layered body.

(3) The layered body and the measurement tire are cured at a temperature of 23 °C and a relative humidity of 50%RH for an hour.

(4) The exposed surface of the adhesive strength measurement test piece in the layered body is attached to an inner surface of the measurement tire at a temperature of 23 °C and a relative humidity of 50%RH. The attaching is performed by reciprocally moving a 2 kg roller once.

(5) The measurement tire to which the layered body is attached is further cured at a temperature of 23 °C and a relative humidity of 50%RH for 30 minutes, followed by measuring the adhesive strength of the adhesive strength measurement test piece to the measurement tire at a peeling angle of 180° and a tensile speed of 300 mm/min using a tensile tester.

The measurement of the adhesive strength is performed for three samples. Then, the adhesive strength values obtained for the three samples are arithmetically averaged to obtain the adhesive strength value A1.

The sealant layer has the adhesive strength value A1 of preferably 1.0 N/20 mm or more, more preferably 2.0 N/20 mm or more, further preferably 2.5 N/20 mm or more. The sealant layer has the adhesive strength value A1 of preferably 30 N/20 mm or less, more preferably 25 N/20 mm or less, further preferably 20 N/20 mm or less.

$A1 \times T/G'_1$ is more preferably 11.0 or less, still more preferably 10.0 or less, further preferably 6.0 or less. Since $A1 \times T/G'_1$ falling within the above range enables the sealant layer in the pneumatic tire sealing sheet according to this embodiment to further suppress air inside the pneumatic tire from leaking out. That is, the pneumatic tire sealing sheet configured as above includes the sealant layer capable of exhibiting even better sealability. Specifically, $A1 \times T / G'_1$ falling

within the above range enables the sealant layer in the pneumatic tire sealing sheet according to this embodiment to far better follow the foreign object with the sharp tip when the foreign object with the sharp tip stuck in the pneumatic tire is removed to form a through hole in the pneumatic tire. Thus, the sealant layer can suitably seal the through hole formed in the pneumatic tire by the foreign object with the sharp tip.

$A1 \times T/G'_1$ can be 0.001 or more, can be 0.01 or more, can be 0.02 or more.

In the sealant layer in the pneumatic tire sealing sheet according to this embodiment, the storage elastic modulus value $G'_1$ is preferably 0.50 MPa or more. The storage elastic modulus value $G'_1$ falling within the above range enables the sealant layer in the pneumatic tire sealing sheet according to this embodiment to even further suppress air inside the pneumatic tire from leaking out. That is, the pneumatic tire sealing sheet configured as above includes the sealant layer capable of exhibiting even better sealability. The sealant layer in the pneumatic tire sealing sheet according to this embodiment has the storage elastic modulus value $G'_1$ of preferably 1.0 MPa or more, more preferably 1.5 MPa or more. The storage elastic modulus value $G'_1$ falling within the above range enables the sealant layer in the pneumatic tire sealing sheet according to this embodiment to even better follow the foreign object with the sharp tip when the foreign object with the sharp tip is removed from the tire. This configuration can further suitably seal the through hole formed in the tire by the foreign object with the sharp tip.

In the sealant layer in the pneumatic tire sealing sheet according to this embodiment, the storage elastic modulus value $G'_1$ can be 100 MPa or less, can be 80 MPa or less, can be 60 MPa or less.

In the sealant layer in the pneumatic tire sealing sheet according to this embodiment, the probe tack value T is preferably 0.05 MPa or more. The probe tack value T falling within the above range enables the sealant layer in the pneumatic tire sealing sheet according to this embodiment to exhibit good adhesiveness to the inner surface of the pneumatic tire. The probe tack value T is more preferably 0.10 or more. The probe tack value T can be 2.0 MPa or less, can be 1.0 MPa or less, can be 0.75 MPa or less.

In the pneumatic tire sealing sheet according to this embodiment, the sealant layer has a storage elastic modulus value $G'_2$ at 23 °C of preferably 0.50 MPa or less, more preferably 0.20 MPa or less. The lower limit of the storage elastic modulus value $G'_2$ is generally 0.01 MPa.

The storage elastic modulus value $G'_2$ can be obtained by taking out the storage elastic modulus value at 23 °C from the data obtained by the measurement in the same manner as in the storage elastic modulus value $G'_1$.

When A2 represents the adhesive strength value at -20 °C to the tire, the sealant layer in the pneumatic tire sealing sheet according to this embodiment has the adhesive strength value A2 of preferably 1.0 N/20 mm or more, more preferably 2.0 N/20 mm or more, further preferably 3.0 N/20 mm or more. The sealant layer in the pneumatic tire sealing sheet has the adhesive strength value A2 of preferably 20 N/20 mm or less, more preferably 18 N/20 mm or less, further preferably 16 N/20 mm or less, still further preferably 10 N/20 mm or less.

The adhesive strength value A2 can be measured as follows:

(1')-(4')

These steps are performed in the same manner as in (1) to (4) of the method for measuring the adhesive strength value A1. (5') The measurement tire to which the layered body is attached is cured at a temperature of -20 °C for 60 minutes, and thereafter the adhesive strength of the small piece sheet body to the measurement tire is measured at a peeling angle of 180° and a tensile speed of 300 mm/min using a tensile tester.

The measurement of the adhesive strength is also performed for three samples. Then, the adhesive strength values obtained for the three samples are arithmetically averaged to obtain the adhesive strength value A2.

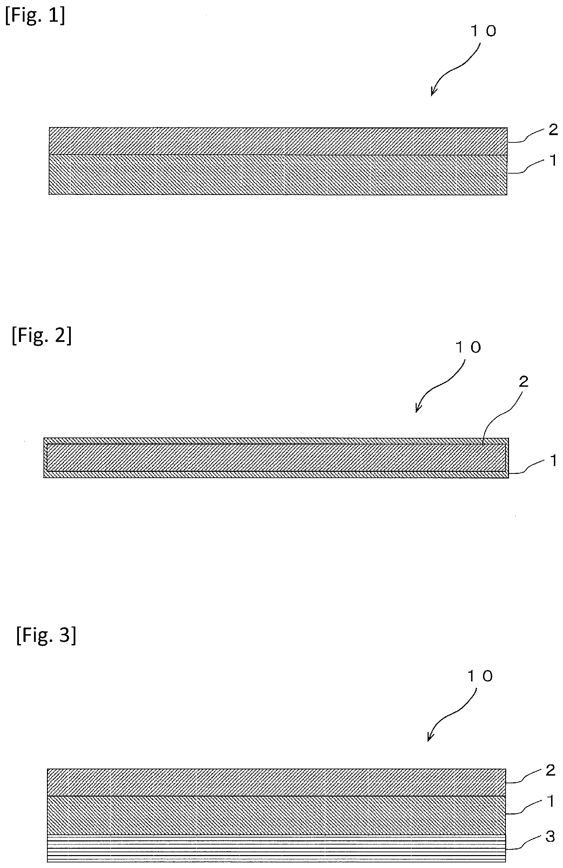

Next, a description will be given on a pneumatic tire sealing sheet according to another embodiment with reference to Fig. 1 and Fig. 2. The pneumatic tire sealing sheet according to this embodiment includes a substrate layer laminated on one side of the sealant layer or disposed inside the sealant layer. That is, the substrate layer can be laminated on the one side of the sealant layer, or can be disposed inside the sealant layer.

In the example shown in Fig. 1, a pneumatic tire sealing sheet 10 according to this embodiment includes a sealant layer 1, and a substrate layer 2 laminated on one side of the sealant layer 1. The sealant layer 1 is attached for use to an inner surface of a pneumatic tire fitted to a wheel assembly of any vehicle including a bicycle or a motorcycle. Examples of the pneumatic tire include a tubeless tire and a tubeless ready tire. The tubeless tire refers to a tire in which no tube is disposed on the inner surface of the tire but an inner liner formed of a rubber sheet is disposed in substitution for the tube; and the tubeless ready tire refers to a tire in which neither the tube nor the inner liner is disposed on the inner surface of the tire. Examples of the vehicle to which such a pneumatic tire is fitted include a road bike, a gravel road bike, a cross bike, and a mountain bike.

As described above, the sealant layer 1 is made of the pneumatic tire sealant composition. For example, the sealant layer 1 can be obtained by mixing the above organic components and the inorganic components in amounts described above for kneading, and forming (applying) the resultant pneumatic tire sealant composition onto the substrate layer 2 in a sheet shape.

Used for the kneading is, for example, a batch-type kneading machine such as a kneader, a Banbury mixer, or a mixing roller, or a continuous kneading machine such as a twin-screw kneader; and used for the forming into a sheet shape is a forming apparatus such as an extruder, a calender roll, or a press machine (thermal press machine).

When the pneumatic tire sealant composition has hot melt properties, the sealant layer 1 can be produced using a hot melt coating machine. Specifically, the sealant layer 1 can be produced by applying the pneumatic tire sealant composition having hot melt properties while being heated to a temperature of, for example, about 200 °C to one side of the substrate layer 2 in a specific thickness.

The thickness of the sealant layer 1 is preferably 50 $\mu$m or more, more preferably 100 $\mu$m or more, further preferably 150 $\mu$m or more, still further preferably 200 $\mu$m or more. The thickness of the sealant layer 1 is preferably 1500 $\mu$m or less, more preferably 1200 $\mu$m or less, further preferably 1000 $\mu$m or less, still further preferably 800 $\mu$m or less. The thickness of the sealant layer 1 falling within the above range enables the pneumatic tire sealing sheet 10 to have excellent lightweight properties and improved workability in being attached to a tire having a curved surface with a large curvature, as in a bicycle tire. In the embodiment with a release liner to be described later, the sealing sheet 10 can be easily kept in a roll shape, and glue can be suppressed from protruding.

The sealant layer 1 can have a single layer structure, or can have a structure with two or more layers with different compositions laminated on each other. The single layer structure refers to a configuration with a single pneumatic tire sealant composition. Thus, the configuration in which a plurality of layers made of the single pneumatic tire sealant composition are laminated on each other has a single layer structure.

When the sealant layer 1 is made of two or more layers with different compositions, it is sufficient that at least one of the layers satisfies the relationship that a ratio of the product of the probe tack value T and the adhesive strength value A1 to the storage elastic modulus value $G'_1$ (A1 $\times$ T / $G'_1$) is 12.0 or less. The at least one layer satisfying the above relationship can suppress the sealability of the sealant layer 1 from being deteriorated over time at the through hole in the pneumatic tire. In further suppressing the sealability of the sealant layer 1 from being deteriorated over time at the through hole in the pneumatic tire, it is preferable that all of the two or more layers with different compositions satisfy the above relationship.

The substrate layer 2 is made of a sheet material. The substrate layer 2 supports the sealant layer 1 to maintain a specific shape. The substrate layer 2 functions to protect the side of the sealant layer 1 not to be attached to an adherend (i.e., inner surface of the pneumatic tire). That is, the substrate layer 2 functions also as a non-adhesive layer.

The sheet material can be made of various known materials. It is preferable that the substrate layer 2 be made of a sheet material selected from the group consisting of a fiber sheet, a foam sheet, a solid sheet, and a multilayer sheet made of at least two kinds thereof laminated on each other.

Used as the various known materials can be organic matters such as cotton, wool, hemp, pulp (cellulose), rubber, and plastics; inorganic matters such as carbon, glass, ceramics, and metals; and mixtures thereof. Used as the sheet material can be, for example, an organic fiber sheet, an inorganic fiber sheet, a rubber foam sheet, a plastic foam sheet, a rubber solid sheet (non-foamed sheet), a plastic solid sheet (non-foamed sheet), a metal solid sheet, or a sheet obtained by laminating a plastic solid sheet on a metal solid sheet. Among these, the sheet material is preferably a fiber sheet.

The fibers forming the fiber sheet can be synthetic resin fibers such as synthetic plastic fibers and synthetic rubber fibers; natural fibers such as cellulose fibers; or organic fibers such as semi-synthetic fibers. The fibers forming the fiber sheet can be metal fibers such as copper fibers, aluminum fibers, and iron fibers; glass fibers; basalt fibers; alumina fibers; ceramic fibers such as rock wool; or inorganic fibers such as carbon fibers. The fibers forming the fiber sheet are preferably the synthetic resin fibers. Examples of the synthetic resin fibers include fibers made from a thermoplastic resin and fibers made from a thermosetting resin. The synthetic resin fibers are preferably fibers made from a thermoplastic resin.

Examples of the thermoplastic resin include: a polyolefin-based resin such as polyethylene (PE) and polypropylene (PP); a polyester-based resin such as polyethylene terephthalate (PET), polyethylene naphthalate (PEN), polylactic acid (PLA), and polybutylene saxinate (PBS); a polyamide-based resin such as polyamide 6 and polyamide 6,6; and a cellulose-based resin such as cellulose acetate. These thermoplastic resins can be individually used, or two or more of them can be used in combination. Among these, a polyolefin-based resin or a polyester-based resin is preferably used as the thermoplastic resin. As the polyolefin-based resin, it is preferable to use the polypropylene (PP), and as the polyester-based resin, it is preferable to use the polyethylene terephthalate (PET).

The fiber sheet can be a nonwoven fabric sheet, or a woven fabric sheet. The nonwoven fabric sheet can be produced by various known methods. The nonwoven fabric sheet can be produced by the dry method or the wet method. Examples of the nonwoven fabric sheet include a spunbonded nonwoven fabric sheet, a thermally bonded nonwoven fabric sheet, a chemically bonded nonwoven fabric sheet, a stitch bonded nonwoven fabric sheet, a needle punched nonwoven fabric sheet, a melt-blown nonwoven fabric sheet, a spun lace nonwoven fabric sheet, and a steam jet nonwoven fabric sheet.

The weight per unit area of the nonwoven fabric sheet is preferably 10 g/m$^2$ or more, more preferably 20 g/m$^2$ or more, further preferably 30 g/m$^2$ or more. The weight per unit area of the nonwoven fabric sheet is preferably 200 g/m$^2$ or less, more preferably 180 g/m$^2$ or less, further preferably 160 g/m$^2$ or less. The weight per unit area falling within the above range allows the substrate layer 2 made of the nonwoven fabric sheet to have sufficient tensile strength. The configuration can also suppress the sealant layer 1 from being removed from the inner surface of the tire, which could result from the rigidity of the substrate layer 2 being excessively high.

The woven fabric sheet can be produced using various known looms. The woven fabric sheet can be produced by any weaving method. Examples of the woven fabric sheet include a plain woven sheet, a twill woven sheet, and a satin woven sheet.

The fiber sheet as above is more advantageous in that it has higher thrust strength when the foreign object with the sharp tip (e.g., nail, shard of glass) is stuck therein than the rubber solid sheet or the plastic solid sheet. However, the substrate layer 2 made only of the fiber sheet may cause components included in the sealant layer 1, such as the tackifier, to migrate to the inside of the substrate layer 2. In terms of sufficiently suppressing the component migration, the sheet material forming the substrate layer 2 is preferably a multilayer sheet formed to have the fiber sheet and the solid sheet laminated on each other. In such a multilayer sheet, it is preferable that the sealant layer 1 be laminated on an exposed surface of the solid sheet. Examples of the multilayer sheet include a sheet in which a fiber sheet and a polyolefin-based resin solid sheet (e.g., polyethylene sheet, polypropylene sheet) having a smaller thickness than the fiber sheet are laminated on each other. The sheet material forming the substrate layer 2 can be a multilayer sheet in which a spunbonded nonwoven fabric and a melt-brown nonwoven fabric having smaller fibers and formed more tightly than the spunbonded nonwoven fabric are laminated on each other. In such a multilayer sheet, it is preferable that the sealant layer 1 be laminated on an exposed surface of the melt-blown nonwoven fabric.

The sheet material forming the substrate layer 2 can be a plastic solid sheet (non-foamed sheet). Examples of the plastic solid sheet include a thermoplastic polyurethane film produced using, as the plastic, the thermoplastic polyurethane resin. Examples of the commercially available thermoplastic polyurethane film include a product under the trade name "Tough Grace TG88-I 25/50" manufactured by Takeda sangyo Corporation. The product "Tough Grace TG88-I 25/50" is formed to have a polyethylene release liner with a thickness of 50 $\mu$m laminated on one surface of a urethane film with a thickness of 25 $\mu$m. When the substrate layer 2 is formed to have the release liner laminated on the one surface of the urethane film as described above, the sealant layer 1 is laminated on the other surface (exposed surface) of the urethane film, and then the release liner is removed from the one surface of the urethane film.

The thickness of the substrate layer 2 is preferably 5 $\mu$m or more, more preferably 10 $\mu$m or more, further preferably 15 $\mu$m or more, and still further preferably 20 $\mu$m or more. The thickness of the substrate layer 2 is preferably 3 mm or less, more preferably 2 mm or less, further preferably 1 mm or less. The thickness of the substrate layer 2 falling within the above range enables the pneumatic tire sealing sheet 10 to have excellent lightweight properties and improved workability in being attached to a tire having a curved surface with a large curvature, as in a bicycle tire. In the embodiment with the release liner to be described later, the sealing sheet 10 can be easily kept in a roll shape.

As in a modified example shown in Fig. 2, the pneumatic tire sealing sheet 10 according to this embodiment can include the sealant layer 1 and the substrate layer 2 disposed inside the sealant layer 1. Even when the pneumatic tire sealing sheet 10 is configured as shown in Fig. 2, the substrate layer 2 can still support the sealant layer 1 to maintain a specific shape. The pneumatic tire sealing sheet 10 according to the modified example shown in Fig. 2 can be produced by impregnating the sheet material serving as the substrate layer 2 with the pneumatic tire sealant composition.

Next, a description will be given on a pneumatic tire sealing sheet according to still another embodiment with reference to Fig. 3.

As shown in Fig. 3, a pneumatic tire sealing sheet 10 according to this embodiment includes a sealant layer 1, a substrate layer 2 laminated on one surface of the sealant layer 1, the substrate layer 2 disposed arbitrarily, and an adhesive layer 3 laminated on the other surface (exposed surface). The pneumatic tire sealing sheet 10 can be configured to include the adhesive layer 3 as shown in Fig. 3 in the case where the sealant layer 1 has insufficient adhesive strength to an adherend (i.e., inner surface of the pneumatic tire). That is, the pneumatic tire sealing sheet 10 configured as above preferably secures its adhesiveness to the adherend (inner surface of the pneumatic tire) with the adhesive layer 3.

The pneumatic tire sealing sheet 10 according to this embodiment shown in Fig. 3 can be produced by obtaining the pneumatic tire sealing sheet 10 as shown in Fig. 1, and thereafter forming (applying) an adhesive composition in which organic and inorganic components are mixed in specific amounts to an exposed surface of the sealant layer 1 into a sheet shape to obtain the adhesive layer 3. The adhesive composition can be obtained using various kneading machines as in the case of the sealant composition. For the forming into a sheet shape, used can be a forming apparatus such as an extruder, a calender roll, or a press machine (thermal press machine), as in the case descried above.

The adhesive layer 3 has an adhesive strength A1' at 23 °C to the tire of preferably 10 N/20 mm or more, more preferably 20 N/20 mm or more.

The adhesive layer 3 can include, as an organic component, butyl rubber.

The butyl rubber is a copolymer of isobutene (isobutylene) and a small amount of isoprene (isobutylene-isoprene). Examples of the butyl rubber include synthetic butyl rubber and recycled butyl rubber. The adhesive layer 3 preferably includes, as a main component, synthetic butyl rubber. The adhesive layer 3 includes preferably 70 mass % or more, more preferably 80 mass % or more, further preferably 90 mass % or more, particularly preferably 100 mass %, of the synthetic butyl rubber based on the total amount of the butyl rubber. That is, it is particularly preferable that the entire butyl rubber included in the adhesive layer 3 be the synthetic butyl rubber. This is because the recycled butyl rubber is obtained by subjecting rubber products made of the butyl rubber as a raw material (e.g., tire tubes) to recycling treatment with oil such as pine oil or mineral oil; thus, oil as an impurity remains in the recycled butyl rubber.

The butyl rubber has a mass average molecular weight of preferably 30,000 or more and 1,500,000 or less. The mass average molecular weight can be obtained as a conversion value of a standard polystyrene from the GPC (gel permeation chromatography) measurement. The GPC method can be performed in the same manner as described in the method for measuring the mass average molecular weight of the thermoplastic elastomer. The mass average molecular weight of the butyl rubber is more preferably 200,000 or more, further preferably 300,000 or more. The mass average molecular weight of the butyl rubber is more preferably 800,000 or less, further preferably 700,000 or less.

The adhesive layer 3 can include, as an organic component, an elastomer component other than the butyl rubber. Examples of the elastomer component other than the butyl rubber include a rubber other than the butyl rubber and a thermoplastic elastomer.

Examples of the rubber other than the butyl rubber include polyisobutylene rubber, acrylic rubber, silicone rubber, urethane rubber, vinylalkyl ether rubber, polyvinyl alcohol rubber, polyvinyl pyrrolidone rubber, polyacrylamide rubber, cellulose rubber, natural rubber, butadiene rubber, chloroprene rubber, styrene-butadiene rubber, acrylonitrile-butadiene rubber, isoprene rubber, and ethylene propylene rubber (EPDM).

Used as the thermoplastic elastomer can be those as described above.

The adhesive layer 3 can include, as the rubber other than the butyl rubber, only the thermoplastic elastomer. In such a case, the adhesive layer 3 can include 70 mass % or more of the butyl rubber and 30 mass % or less of the thermoplastic elastomer when the sum of the content of the butyl rubber and the content of the thermoplastic elastomer is 100 mass %. Also, in the case as above, the adhesive layer 3 can include 80 mass % or more of the butyl rubber and 20 mass % or less of the thermoplastic elastomer. Further, in the case as above, the adhesive layer 3 can include 1 mass % or more, can include 2 mass % or more, can include 3 mass %, of the thermoplastic elastomer.

The adhesive layer 3 can include 70 mass % or more, can include 80 mass % or more, can include 90 mass % or more, can include 100 mass %, of the synthetic butyl rubber as the butyl rubber. The adhesive layer 3 including the butyl rubber as above can include, as the rubber other than the butyl rubber, only the thermoplastic elastomer. As the content of the butyl rubber and the content of the thermoplastic elastomer, those as described above can be employed.

The adhesive layer 3 includes preferably 8 mass % or more, more preferably 10 mass % or more, of the elastomer component. The adhesive layer 3 can include 100 mass %, can include 90 mass % or less, can include 70 mass % or less, can include 50 mass % or less, of the elastomer component. The elastomer component is a generic concept referring to the butyl rubber, the rubber other than the butyl rubber, and the thermoplastic elastomer.

The adhesive layer 3 can include, as the organic components other than the elastomer component, the softener, the tackifier, the aging inhibitor, or the like. As the softener, the tackifier, and the aging inhibitor, those as described above can be used.

The adhesive layer 3 can include an inorganic component. The adhesive layer 3 can include, as the inorganic component, an inorganic filler and an inorganic colorant. The adhesive layer 3 preferably includes, as the inorganic component, the inorganic filler. As the inorganic filler and the inorganic colorant, those as described above can be used. The adhesive layer 3 preferably includes, as the inorganic filler, calcium carbonate. The content of the inorganic filler in the adhesive layer 3 is preferably 90 mass % or less, more preferably 80 mass % or less, further preferably 70 mass % or less.

The adhesive layer 3 includes preferably 500 mass parts or less, more preferably 450 mass parts or less, further preferably 400 mass parts or less, of the inorganic component based on 100 mass parts of the elastomer component. The adhesive layer 3 includes preferably 50 mass parts or more, more preferably 150 mass parts or more, further preferably 270 mass parts or more, of the inorganic component based on 100 mass parts of the elastomer component.

The thickness of the adhesive layer 3 is preferably 50 $\mu$m or more, more preferably 100 $\mu$m or more. The thickness of the adhesive layer 3 is preferably 500 $\mu$m or less, more preferably 400 $\mu$m or less.

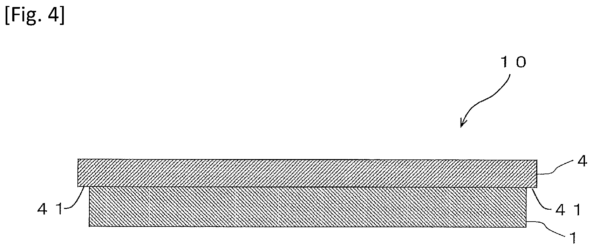

Next, a description will be given on a pneumatic tire sealing sheet according to yet another embodiment with reference to Fig. 4.

As shown in Fig. 4, a pneumatic tire sealing sheet 10 according to this embodiment includes a sealant layer 1, and a release liner 4 laminated on the sealant layer 1. In this embodiment, the sealant layer 1 has a first surface as an adhesive surface configured to adhere to the tire, and a second surface opposite to the first surface. The release liner 4 is laminated on the second surface. This embodiment enables the sealant layer 1 to come into contact with the tire while pressing an outer surface of the release liner 4 with fingers and the like in a work for attaching the sealant layer 1 to the tire. This allows the sealant layer 1 to easily conform well to the tire.

In terms of improving the workability of such a work, the release liner 4 has a tensile modulus at 23 °C of preferably 4000 MPa or less. This configuration enables the sealant layer 1 to have improved workability in being attached to a tire having a curved surface with a large curvature, as in a bicycle tire. The tensile modulus at 23 °C of the release liner 4 is more preferably 1000 MPa or more. This configuration can suppress the release liner 4 from being broken by the pressing during the above work.

The tensile modulus at 23 °C of the release liner 4 is calculated from the result of a tensile test. The tensile test is carried out under the following measurement conditions:

[Measurement conditions]

- Test environment: 23 °C = 2 °C, 50% RH $\pm$ 10% RH
- Test piece shape: 10 mm wide, 50 mm long
- Tensile speed: 300 mm/min
- Distance between chucks: 10 mm

A tensile modulus Et is determined from a gradient of a stress-strain curve to strain at specified two points (i.e., a ratio between a tensile stress and the strain corresponding thereto within the tensile proportional limit). Specifically, when $\sigma_1$ represents a stress at $\varepsilon_1 = 0.10$ of the stress-strain curve and $\sigma_2$ represents a stress at $\varepsilon_2 = 0.05$, the tensile modulus Et is obtained by Et $= (\sigma_2 - \sigma_1) / (\varepsilon_2 - \varepsilon_1)$. When the stress-strain curve has no linear portion, the gradient of the tangent line at the starting point of deformation is defined as the tensile modulus.

The thickness of the release liner 4 is preferably 0.02 mm or more, more preferably 0.05 mm or more, further preferably 0.08 mm or more. The thickness of the release liner 4 is preferably 0.8 mm or less, more preferably 0.5 mm or less, further preferably 0.3 mm or less. The thickness of the release liner 4 falling within the above range enables the pneumatic tire sealing sheet 10 to be easily attached to well follow a curved surface of a tire, and further to have better sealability. Further, in the embodiment with the release liner to be described later, the sealing sheet 10 can be easily kept in a roll shape.

The pneumatic tire sealing sheet 10 according to this embodiment can be wound into a roll shape to have the release liner 4 disposed outside and the sealant layer 1 disposed inside for reducing the size before use (e.g., during storage). In this case, a thickness tolerance of the sealant layer 1 based on the average thickness of the sealant layer 1 is preferably 25% or less, more preferably less than 20%, of the average thickness. This configuration allows the inner circumferential surface of nth round portion of the sealant layer to easily come into contact with the outer circumferential surface of the n-1th round portion of the release liner 4, thereby allowing the sealing sheet 10 to be kept in a roll shape.

The release liner 4 has end edge portions on both sides which are preferably dry edge parts 41 with no sealant layer 1 laminated thereon. Each of the dry edge parts 41 has a width of preferably 1 mm or more. This configuration can prevent glue from protruding from the release liner 4 when the pneumatic tire sealing sheet 10 is wound into a roll shape. This allows the sealant layer 1 to be easily attached to the tire. Further, the release liner 4 can be easily removed from the sealant layer 1 attached to the tire by pinching the dry edge parts 41. When the release liner 4 is being removed, the above configuration can suppress the sealant layer 1 adhering to the tire from being unexpectedly removed from the tire.

The release liner 4 can be, for example, a resin film or a paper film. Examples of the resin film include a polyethylene terephthalate resin film, a polyethylene film, and a polypropylene film. It is preferable that at least the surface of the release liner 4 laminated on the sealant layer 1 be treated with a surface treatment agent. Examples of the surface treatment agent include a silicone-based surface treatment agent and a fluorine-based surface treatment agent.

In this embodiment, the adhesive layer 3 can be laminated on a surface opposite to the second surface of the sealant layer 1.

Next, a description will be given mainly on matters common to the above embodiments.

The thickness of the pneumatic tire sealing sheet 10 according to each of the embodiments is preferably 50 $\mu$m or more, more preferably 100 $\mu$m or more, further preferably 150 $\mu$m or more, still further preferably 200 $\mu$m or more, particularly preferably 500 $\mu$m or more. The thickness of the pneumatic tire sealing sheet 10 is preferably 2500 $\mu$m or less, more preferably 2000 $\mu$m or less, further preferably 1500 $\mu$m or less, particularly preferably 1000 $\mu$m or less.

In the embodiment with the release liner 4, the ratio of the thickness of the pneumatic tire sealing sheet 10 to the thickness of the release liner 4 (thickness of the pneumatic tire sealing sheet 10 / thickness of the release liner 4) is preferably 30 or less, more preferably 25 or less, further preferably 20 or less, particularly preferably 10 or less. The ratio of the thickness of the pneumatic tire sealing sheet 10 to the thickness of the release liner 4 is preferably 0.5 or more, more preferably 1 or more, further preferably 2 or more. This configuration enables the pneumatic tire sealing sheet 10 to be easily attached to well follow a curved surface of a tire, and further to have better sealability. Further, this configuration allows the pneumatic tire sealing sheet 10 to be kept in a roll shape, and can suppress glue from protruding.

The pneumatic tire sealing sheet 10 according to each of the embodiments has a mass per unit volume of preferably 1500 g/m$^2$ or less, more preferably 1300 g/m$^2$ or less, further preferably 1200 g/m$^2$ or less. The mass per unit volume falling within the above range enables the pneumatic tire sealing sheet according to each of the embodiments to be relatively light in weight.

The pneumatic tire sealing sheet 10 according to each of the embodiments has a mass per unit volume of preferably 50 g/m$^2$ or more, more preferably 100 g/m$^2$ or more, further preferably 200 g/m$^2$ or more. The mass per unit volume falling within the above range enables the pneumatic tire sealing sheet according to each of the embodiments to stably exhibit sealability.

When the pneumatic tire sealing sheet is made only of the sealant layer 1, the mass per unit volume of the pneumatic tire sealing sheet means the mass per unit volume of the sealant layer 1. When the pneumatic tire sealing sheet includes, in addition to the sealant layer 1, the substrate layer 2 as shown in Fig .1 and Fig. 2, the mass per unit volume of the pneumatic tire sealing sheet means the sum of the mass per unit volume of the sealant layer 1 and the mass per unit volume of the substrate layer 2. Further, when the pneumatic tire sealing sheet includes, in addition to the sealant layer 1, the substrate layer 2 and the adhesive layer 3, as shown in Fig. 3, the mass per unit volume of the pneumatic tire sealing sheet means the sum of the mass per unit volume of the sealant layer 1, the mass per unit volume of the substrate layer 2, and the mass per unit volume of the adhesive layer 3. The mass herein shall not include the mass of the release liner.

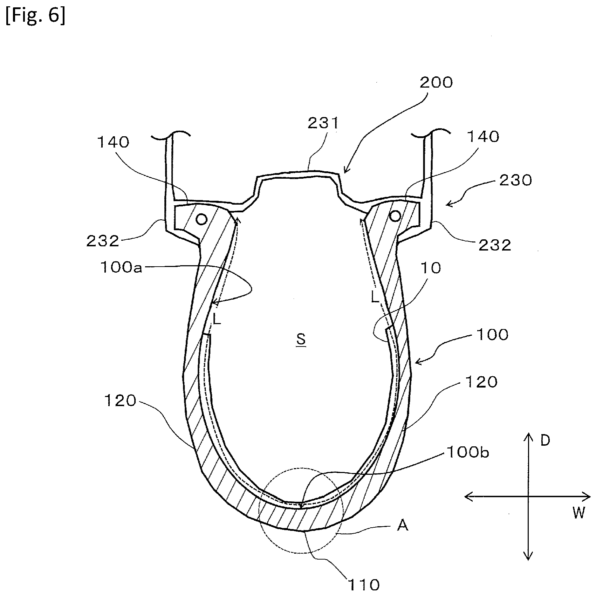

The pneumatic tire sealing sheet 10 according to each of the embodiments is preferably formed in a tape shape. When the width of a pneumatic tire according to the ETRTO standards is defined as $W_0$ (mm) and the dimension in a width direction of the pneumatic tire sealing sheet 10 to be attached to the inside of the pneumatic tire (tape width: mm) is defined as $W_1$, the pneumatic tire sealing sheet 10 according to each of the embodiments has the tape width $W_1$ that is preferably 10% or more of the pneumatic tire width $W_0$. A ratio of the tape width $W_1$ to the pneumatic tire width $W_0$ ($W_1 / W_0 \times 100$) can be 25% or more, can be 50% or more, can be 100% or more. The tape width $W_1$ preferably corresponds to the width of a bicycle tire specified in the ETRTO standards, and is more preferably 25 to 62 mm. Such a pneumatic tire sealing sheet 10 can cover a portion of a pneumatic tire 100 extending from an inner surface of a ground-contacting part 110 to a part of an inner surface of a sidewall 120 shown in Fig. 6. This configuration enables the pneumatic tire sealing sheet 10 to securely cover the ground-contacting part 110, in which through holes are relatively easily formed. An inner surface of a transition portion of the pneumatic tire 100 between the ground-contacting part 110 and the sidewall 120 is a curved surface with a large curvature; thus, the pneumatic tire sealing sheet 10 including the above release liner is effective for such a curved surface. The width herein shall not include the width of the release liner.

(Example of use of pneumatic tire sealing sheet)

Next, a description will be given on an example of use of the pneumatic tire sealing sheet 10 according to each of the embodiments. A description will be hereinafter given on an example in which the pneumatic tire sealing sheet 10 according to this embodiment is attached to the inner surface of a bicycle tire for use.

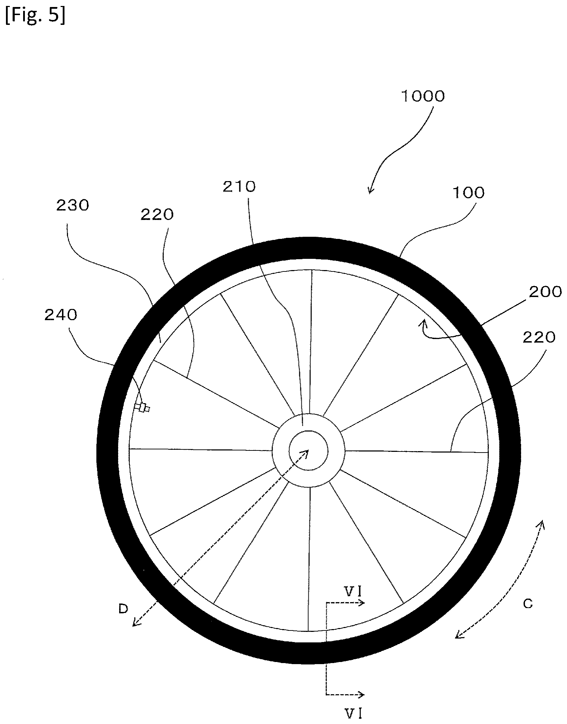

Fig. 5 and Fig. 6 each are a schematic view showing a wheel assembly of a bicycle. A wheel assembly 1000 includes the pneumatic tire 100 and a wheel 200 to which the pneumatic tire 100 is fitted. The wheel 200 can be of a disc type or a spoke type. The wheel 200 shown in Fig. 5 is of a spoke type.

The wheel 200 includes: a hub 210 having a disc shape, located at a center of the wheel assembly 1000, and rotatably mounted to a fork (not shown) of a bicycle; a plurality of spokes 220 extending radially outward from an outer circumferential part of the hub 210; and a rim 230 fixed by the spokes 220. As shown in Fig. 6, the rim 230 includes a base part 231 to which outer end parts of the spokes 220 are fixed. The base part 231 has a cylindrical shape with a rotating shaft of the wheel assembly 1000 as a center axis. The base part 231 has a dimension in an axial direction (width direction W of the pneumatic tire 100) that is substantially the same as the width of the pneumatic tire 100. The rim 230 includes a pair of flanges 232 respectively extending from both end portions in the axial direction of the base part 231 outwardly in a radial direction D. The pneumatic tire 100 is mounted to the wheel 200 so as to have both end parts in the width direction W placed inside the respective flanges 232.

As shown in Fig. 6, in the rim 230, the base part 231 and the flanges 232 extending outwardly in the radial direction D from the both end parts of the base part 231 are formed to have a reversed U shape in cross section in a plane direction orthogonal to a circumferential direction C of the wheel assembly 1000. In contrast, the pneumatic tire 100 has a U shape in cross section. A bottom part of the pneumatic tire 100 having a U shape and opposed to the base part 231 coincides with the ground-contacting part 110 configured to be in contact with the ground. The pneumatic tire 100 includes the sidewalls 120 respectively extending inwardly in the radial direction D from both end parts of the ground-contacting part 110 in the width direction W of the pneumatic tire 100. The pneumatic tire 100 includes bead parts 140 slightly protruding outwardly in the axial direction from end parts respectively of the sidewalls 120 opposite to the ground-contacting part 110. In the wheel 200, the flanges 232 have tip parts respectively bent inwardly in the width direction (into a hook shape), inside which the end parts in the width direction W of the pneumatic tire 100 are disposed. The pneumatic tire 100 is fitted to the rim 230 by bringing the bead parts 140 and the sidewalls 120 close to the bead parts 140 into abutting contact with the respective flanges 232 from inside and locking the bead parts 140 to the tip parts of the respective flanges 232.

The wheel assembly 1000 includes a valve 240 for injecting a gas such as air or nitrogen gas into an internal space S surrounded by the rim 230 and the pneumatic tire 100. In this embodiment, the pneumatic tire 100 is configured such that, when a gas is injected through the valve 240, the sidewalls 120 opposed in the width direction W to each other with a distance therebetween are deformed to be away from each other to be brought into abutting contact firmly with the respective flanges 232. The pneumatic tire 100 is thereby firmly fixed to the rim 230.

The wheel assembly 1000 includes no tube in the internal space S. As shown in Fig. 6, the wheel assembly 1000 includes the pneumatic tire sealing sheet 10 on the inner surface of the pneumatic tire 100. In Fig. 6, details of the configuration of the pneumatic tire sealing sheet 10 are omitted. That is, Fig. 6 shows the configuration of the pneumatic tire sealing sheet 10 from which the sealant layer 1, the substrate layer 2, and the like are omitted.

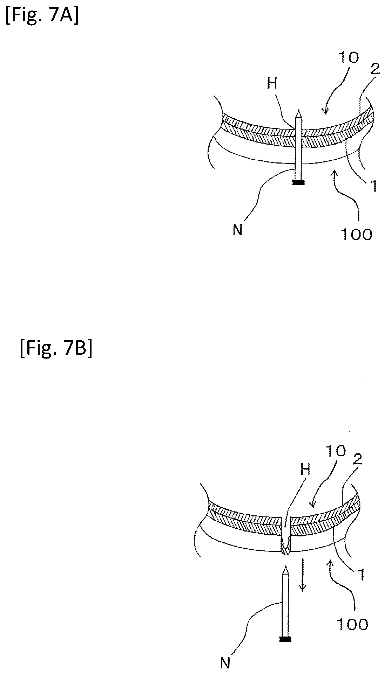

Next, a description will be given on how the pneumatic tire sealing sheet 10 works when being attached to the inner surface of the pneumatic tire 100, with reference to Fig. 7A and Fig. 7B.

As shown in Fig. 7A, when a nail N is stuck in the pneumatic tire 100, a through hole H is formed in the pneumatic tire 100 to be directed from an outer surface (i.e., ground-contacting surface in contact with the road surface) toward an inner surface thereof. When the bicycle travels on the road surface with the nail N stuck in the pneumatic tire 100, the nail N would damage the wheel 200 to which the pneumatic tire 100 is mounted; thus, a rider of the bicycle would remove the nail N from the pneumatic tire 100. Consequently, the pneumatic tire 100 has the through hole H exposed (see Fig. 7B). To seal up the through hole H thus exposed, the sealant layer 1 of the pneumatic tire sealing sheet 10 needs to have a physical property of being capable of following the nail N being pulled outward for removal. That is, the sealant layer 1 needs to have a physical property of firmly adhering to a rod-shaped portion of the nail N and needs to have a reasonable hardness to follow the nail N being pulled outward and fill a part of the exposed through hole H, as shown in Fig. 7B. In the state where a sealing product is formed by filling the part of the exposed through hole H with the sealant layer 1, the sealing product needs to be prevented from being pushed out of the pneumatic tire 100 by the internal pressure of the pneumatic tire 100 that rises when the bicycle with the pneumatic tire 100 travels on a road surface. Thus, the sealant layer 1 that forms the sealing object needs to have a reasonable hardness. In consideration of the above, the sealant layer 1 needs to have adhesiveness for firmly adhering to the rod-shaped portion of the nail N, and a moderate viscoelastic property to be prevented from being pushed out of the pneumatic tire 100 when filling the part of the through hole H or being formed into the sealing product within the through hole H.

In the pneumatic tire sealing sheet 10 according to this embodiment, the sealant layer 1 is configured such that the storage elastic modulus value $G'_1$, which is a parameter of the viscoelastic property, and the probe tack value T and the adhesive strength A1, which are parameters relating to adhesiveness, satisfy a specific relationship. That is, the sealant layer 1 of the pneumatic tire sealing sheet 10 is configured to satisfy the specific relationship that the ratio of the product of the probe tack value T and the adhesive strength A1 to the storage elastic modulus value $G'_1$ ($A1 \times T/G'_1$) is 12.0 or less. This configuration allows the sealant layer 1 to form the sealing product to suitably fill the part of the through hole H exposed in the pneumatic tire 100, and can sufficiently suppress the sealing product from being pushed out of the pneumatic tire 100 by the internal pressure of the pneumatic tire 100 that rises during travelling on the road surface.

When a length of an inner wall surface 100a of the pneumatic tire 100 extending from a lowest point 100b to an upper end of the pneumatic tire 100 along the inner wall surface 100a is defined as L (mm), as shown in Fig. 6, the pneumatic tire sealing sheet 10 is preferably attached to cover at least areas each by 0.1 L extending from the lowest point 100b toward the respective sides in the width direction W. In other words, the pneumatic tire sealing sheet 10 is disposed to preferably cover 10% or more of the length in the width direction (2L) along the inside of the pneumatic tire 100. The pneumatic tire sealing sheet 10 is disposed to more preferably cover 15% or more, further preferably cover 20% or more, of the length in the width direction (2L) along the inner surface of the pneumatic tire 100. The pneumatic tire sealing sheet 10 can be disposed to cover 100% or less of the length in the width direction (2L) along the inner surface of the pneumatic tire 100. The pneumatic tire sealing sheet 10 attached to the inner wall surface 100a of the pneumatic tire 100 as described above can suitably suppress the pneumatic tire 100 from going flat when a foreign object with a sharp edge such as a nail is stuck in the pneumatic tire 100.

The matters disclosed herein include the following.

(1) A pneumatic tire sealing sheet including a sealant layer, in which, when $G'_1$ represents a storage elastic modulus value at -20 °C of the sealant layer, T represents a probe tack value at 23 °C of the sealant layer, and A1 represents an adhesive strength value at 23 °C of the sealant layer to a tire, a ratio of a product of the probe tack value T and the adhesive strength value A1 to the storage elastic modulus value $G'_1$ ($A1 \times T / G'_1$) is 12.0 or less.

(2) The pneumatic tire sealing sheet according to (1) above, in which the storage elastic modulus value $G'_1$ is 0.50 MPa or more.

(3) The pneumatic tire sealing sheet according to (1) or (2) above, in which the probe tack value T is 0.05 MPa or more.

(4) The pneumatic tire sealing sheet according to any of (1) to (3) above, in which the sealant layer includes, as an organic component, a thermoplastic elastomer.

(5) The pneumatic tire sealing sheet according to (4) above, in which the thermoplastic elastomer is a styrene-based thermoplastic elastomer.

(6) The pneumatic tire sealing sheet according to (5) above, in which the styrene-based thermoplastic elastomer has a diblock ratio of 10% or more and 80% or less.

(7) The pneumatic tire sealing sheet according to any of (1) to (6) above, in which the adhesive strength value A1 is 1.0 N/20 mm or more.

(8) The pneumatic tire sealing sheet according to any of (1) to (7) above, in which, when A2 represents an adhesive strength value at -20 °C of the sealant layer to the tire, the adhesive strength value A2 is 1.0 N/20 mm or more.

(9) The pneumatic tire sealing sheet according to any of (1) to (8) above, in which the tire is a tubeless tire or a tubeless ready tire.

(10) The pneumatic tire sealing sheet according to any of (1) to (9) above, including a substrate layer laminated on one surface of the sealant layer or disposed inside the sealant layer.

(11) The pneumatic tire sealing sheet according to any of (1) to (10) above, in which the sealant layer is made of two or more kinds of layers having different compositions that are laminated on each other.

(12) The pneumatic tire sealing sheet according to (10) or (11) above, in which the substrate layer is made of a sheet material selected from the group consisting of a fiber sheet, a foam sheet, a solid sheet, and a multilayer sheet formed by laminating at least any of two of these sheets.

(13) The pneumatic tire sealing sheet according to any of (10) to (12) above, having a mass per unit area of 1500 $g/m^2$ or less.

(14) The pneumatic tire sealing sheet according to any of (10) to (13) above, having a tape shape, and having a width greater by 10% or more of a width of the pneumatic tire specified according to the ETRTO standard.

(15) The pneumatic tire sealing sheet according to any of (1) to (14) above, having a tape shape, and further including a release liner laminated on the sealant layer, in which the release liner is laminated on an opposite side to an adhesive side of the sealant layer to the tire.

(16) The pneumatic tire sealing sheet according to (15) above, in which the release liner has a tensile modulus at 23 °C of 4000 MPa or less.

(17) The pneumatic tire sealing sheet according to (15) or (16) above, being wound into a roll shape to have the release liner arranged outside, in which a thickness tolerance of the sealant layer based on an average thickness of the sealant layer is 25% or less of the average thickness.

(18) The pneumatic tire sealing sheet according to any of (15) to (17) above, in which the release liner has both end edges being dry edge parts on which no sealant layer is laminated.

(19) The pneumatic tire sealing sheet according to (18) above, in which each of the dry edge parts has a width of 1 mm or more.

The pneumatic tire sealing sheet according to the present invention is not limited to the aforementioned embodiment. The pneumatic tire sealing sheet according to the present invention is not limited by the aforementioned operational effects, either. Various modifications can be made to the pneumatic tire sealing sheet according to the present invention without departing from the gist of the present invention.

EXAMPLES

Next, a description will be given on the present invention in more detail by way of examples. The following examples are intended to illustrate the present invention in further detail, and are not intended to limit the scope of the present invention.

First, a description will be given on the raw materials shown in Table 1 below.

(1) Elastomer components

    (a) Thermoplastic elastomers

        -  Styrene-isoprene-styrene copolymers (SIS)

            SIS 1: 15 mass % styrene, diblock ratio of 78%
            SIS 2: 16 mass % styrene, diblock ratio of 56%
            SIS 3: 14 mass % styrene, diblock ratio of 26%

        -  Styrene-isobutylene-styrene copolymer (SIBS)
            SIBS 1: 14 mass % styrene, diblock ratio of 26%
            SIS 1 is the trade name "Quintac 3520" manufactured by Zeon Corporation, SIS 2 is the trade name "Quintac 3433N" manufactured by Zeon Corporation, SIS 3 is the trade name "Quintac 3421" manufactured by Zeon Corporation, and SIBS 1 is the trade name "SIBSTAR (registered trademark) 062M" manufactured by KANEKA CORPORATION.

(b) Butyl rubber (IIR)

- JSR BUTYL 268 (manufactured by JSR, mass average molecular weight of 500,000)

(2) Tackifiers

- Tackifier 1
  Terpene resin a (trade name "YS Resin PX 1150 N" manufactured by YASUHARA CHEMICAL CO., LTD., softening point of 115 °C)
- Tackifier 2
  Terpene resin b (trade name "YS Resin PX 300N" manufactured by YASUHARA CHEMICAL CO., LTD., softening point of 30 °C)
- Tackifier 3
  Aromatic petroleum resin (trade name "SYLVARES SA 140" manufactured by Kraton Corporation, softening point of 137 °C)
- Tackifier 4
  Rosin ester (trade name "PENSEL D-160" manufactured by ARAKAWA CHEMICAL INDUSTRIES, LTD., softening point of 150 to 165 °C)
- Tackifier 5
  C5 hydrocarbon (trade name "T-REZ RC093" manufactured by TonenGeneral Sekiyu K.K., softening point of 93 °C, number average molecular weight of 890)
- Tackifier 6
  Copolymer resin of C5 hydrocarbon and C9 hydrocarbon (aromatic hydrocarbon) (trade name "Quintac N180" manufactured by Zeon Corporation, softening point of 80 °C)

(3) Softeners

- Paraffin oil 1
  Trade name "Diana Process Oil NS-90S" manufactured by Idemitsu Kosan Co., Ltd.
- Hydrocarbon-based 1
  Trade name "PB1300" manufactured by DAELIM CORPORATION (number average molecular weight of 1280)
- Hydrocarbon-based 2
  Trade name "NISSEKI POLYBUTENE HV-300" manufactured by ENEOS
- Paraffin oil 2
  Trade name "Diana Process Oil PW-90" manufactured by Idemitsu Kosan Co., Ltd.

(4) Inorganic filler

- Calcium carbonate
  Heavy calcium carbonate (manufactured by MARUO CALCIUM CO., LTD., residue on sieve (350 mesh) of 0.5% or less (in accordance with JIS K 5101))

(5) Colorant

- Carbon: Seast 3H (manufactured by TOKAI CARBON CO., LTD., carbon black)

The pneumatic tire sealant composition according to each of Examples 1 to 13 and Comparative Examples 1 and 2 was obtained by mixing, while heating, the rubber components, (thermoplastic elastomers and butyl rubber), the tackifiers, the softeners, the inorganic filler, and the colorant in the mixing ratio (mass parts) shown in Table 1 below. Hereinafter, the pneumatic tire sealant composition is referred to simply as the sealant composition.

[Example 1]

A substrate layer (urethane film with a release liner (trade name "Tough Grace TG88-I 25/50" manufactured by Takeda sangyo Corporation; 25 μm thick urethane film, 50 μm thick release liner (made of polyethylene)) was prepared, and the sealant composition according to Example 1 was applied to an exposed surface (surface with no release liner attached) of the substrate layer to form a sealant layer. Specifically, the sealant composition while being heated to 150 °C was applied to the exposed surface of the substrate layer to have a thickness of 0.5 mm using a holt melt coating machine to form a sealant layer. Next, the adhesive composition according to Example 1 was applied to the exposed surface of the sealant layer to form an adhesive layer. Specifically, the adhesive composition according to Example 1 while being heated to 80 °C was transfer-coated on the exposed surface of the sealant layer to have a thickness of 0.1 mm using a calender roll (four 8-inch rolls) to form the adhesive layer. The adhesive composition according to Example 1 included 10 mass parts of SIS 2 as the thermoplastic elastomer, 90 mass parts of JSR BUTYL 268 as the butyl rubber, 15 mass parts of the tackifier 5, 260 mass parts of the hydrocarbon-based polybutene (PB 1300) as the softener, 380 mass parts of the heavy calcium carbonate, and 3 mass parts of carbon (Seast 3H). Then, the urethane film with the release liner was entirely removed to obtain the pneumatic tire sealing sheet according to Example 1. That is, the pneumatic tire sealing sheet according to Example 1 included no substrate layer. Hereinafter, the pneumatic tire sealing sheet is referred to simply as the sealing sheet.

[Example 2]

The sealing sheet according to Example 2 was obtained in the same manner as in Example 1, except that only the release liner was removed from the urethane film with the release liner. That is, the sealing sheet according to Example 2 included, as the substrate layer, the urethane film having a thickness of 25 $\mu$m.

[Example 3]

The sealing sheet according to Example 3 was obtained in the same manner as in Example 2, except that the mass of the sealant layer and the total mass of the sealing sheet were changed as shown in Table 2.

[Example 4]

The sealing sheet according to Example 4 was obtained in the same manner as in Example 2, except that the sealant composition according to Example 4 was used in substitution for the sealant composition according to Example 2, and no adhesive layer was formed.

[Example 5]

The sealing sheet according to Example 5 was obtained in the same manner as in Example 4, except that the sealant composition according to Example 5 was used in substitution for the sealant composition according to Example 4.

[Example 6]

The sealing sheet according to Example 6 was obtained in the same manner as in Example 2, except that the sealant composition according to Example 6 was used in substitution for the sealant composition according to Example 2.

[Example 7]

The sealing sheet according to Example 7 was obtained in the same manner as in Example 1, except that the sealant composition according to Example 7 was used in substitution for the sealant composition according to Example 1.

[Example 8]

The sealing sheet according to Example 8 was obtained in the same manner as in Example 2, except that a sealant composition for forming a first layer and a sealant composition for forming a second layer were used in substitution for the sealant composition according to Example 2. The sealant composition for forming the first layer shared the same composition with the sealant composition according to Example 1, and the sealant composition for forming the second layer shared the same composition with the sealant composition according to Example 4. In the sealing sheet according to Example 8, the sealant layers were formed on the substrate layer in order of the first layer and the second layer. That is, in the sealing sheet according to Example 8, the sealant layer of the second layer had an exposed surface (adhesive surface). In the sealing sheet according to Example 8, the sealant layer of the first layer had a thickness of 0.15 mm, and the sealant layer of the second layer had a thickness of 0.8 mm.

[Example 9]

The sealing sheet according to Example 9 was obtained in the same manner as in Example 4, except that no substrate layer was formed.

[Example 10]

The sealing sheet according to Example 10 was obtained in the same manner as in Example 9, except that the release liner had an elastic modulus of 3600 MPa.

[Example 11]

The sealing sheet according to Example 11 was obtained in the same manner as in Example 9, except that the release liner had an elastic modulus of 4200 MPa.

[Example 12]

The sealing sheet according to Example 12 was obtained in the same manner as in Example 9, except that the sealant layer had a thickness tolerance of 25%.

[Example 13]

The sealing sheet according to Example 13 was obtained in the same manner as in Example 9, except that the sealant layer had a thickness tolerance of 40%.

[Comparative Example 1]

The sealing sheet according to Comparative Example 1 was obtained in the same manner as in Example 4, except that the sealant composition according to Comparative Example 1 was used in substitution for the sealant composition according to Example 4.

[Comparative Example 2]

The sealing sheet according to Comparative Example 2 was obtained in the same manner as in Example 4, except that the sealant composition according to Comparative Example 2 was used in substitution for the sealant composition according to Example 4.

[Comparative Example 3]

A substrate layer (urethane film with a release liner (trade name "Tough Grace TG88-I 25/50" manufactured by Takeda sangyo Corporation; 25 μm thick urethane film, 50 μm thick release liner (made of polyethylene)) was prepared, and ethylene propylene diene rubber (EPDM; trade name "X-3042E" manufactured by Mitsui Chemicals, Inc.) was used in substitution for the sealant composition according to Example 2 to form a sealant layer (EPDM layer) on an exposed surface (surface with no release liner attached) of the substrate layer. The sealant layer was formed by applying the ethylene propylene diene rubber while being heated to 140 °C to have a thickness of 0.5 mm using a calender roll (four 8-inch rolls). Next, the adhesive layer was formed on the sealant layer in the same manner as in Example 1 to form the layered body in which the release liner, the sealant layer, and the adhesive layer were laminated in this order. Then, the release liner was removed from the layered body to thereby obtain the sealing sheet according to Comparative Example 3.

Table 1

| Category | Component | Description | Ex. 1-3 Sealant composition | Ex. 4, 9-13 Sealant composition | Ex. 5 Sealant composition | Ex. 6 Sealant composition | Ex. 7 Sealant composition | Ex. 8 Sealant composition 1 (1st layer) | Ex. 8 Sealant composition 2 (2nd layer) | Ex. 1-3, 7 Adhesive composition | C. Ex. 1 Sealant composition | C. Ex. 2 Sealant composition | C. Ex. 3 Sealant composition |
|---|---|---|---|---|---|---|---|---|---|---|---|---|---|
| Thermoplastic elastomer | SIS 1 | 15% styrene amount, diblock ratio of 78% | 100 | - | - | 100 | - | 100 | - | - | - | - | - |
| | SIS 2 | 16% styrene amount, diblock ratio of 56% | - | - | - | - | - | - | - | 10 | 10 | 10 | - |
| | SIS 3 | 14% styrene amount, diblock ratio of 26% | - | 100 | 100 | - | - | - | 100 | 90 | 90 | 90 | - |
| | SIBS 1 | 20% styrene amount, diblock ratio of 41% | - | - | - | - | - | - | - | - | - | - | - |
| Butyl rubber (IIR) | | JSR BUTYL 268, Mw 500,000 | - | - | - | - | 100 | - | - | - | - | - | - |
| | EPDM | | - | - | - | - | - | - | - | - | - | - | 100 |
| Tackifier | Tackifier 1 | Terpene resin a, softening point 115 °C | 60 | - | - | - | - | 60 | - | - | - | - | - |
| | Tackifier 2 | Terpene resin b, softening point 30 °C | 10 | - | - | - | - | 10 | - | - | - | - | - |
| | Tackifier 3 | Aromatic petroleum resin, softening point 137 °C | 8 | - | - | - | - | 8 | - | - | - | - | - |
| | Tackifier 4 | Rosin ester, softening point 150-165 °C | 20 | - | - | - | - | 20 | - | - | - | - | - |
| | Tackifier 5 | C5 hydrocarbon, softening point 93 °C | - | - | - | 130 | - | - | - | 15 | 15 | 15 | - |
| | Tackifier 6 | C5 + aromatic, softening point 80 °C | - | 100 | 100 | 100 | - | - | 100 | - | - | - | - |
| Softener | Paraffin oil 1 | NS-90S | - | - | 100 | 100 | - | - | - | - | - | - | - |
| | Hydrocarbon 1 | PB1300 | - | - | - | - | - | - | - | 260 | 260 | 215 | - |
| | Hydrocarbon 2 | HV-300 | - | 60 | 40 | - | - | - | 60 | - | - | - | - |
| | Paraffin oil 2 | PW-90 | - | - | 19 | - | - | - | - | - | - | - | - |
| Inorganic filler | Calcium carbonate | Heavy calcium carbonate | - | - | - | - | - | - | - | 380 | 380 | 380 | - |
| Colorant | Carbon | Seast 3H | - | - | - | - | - | - | - | 3 | 3 | 3 | - |

[Probe tack value]

The probe tack value T was measured for the sealant layer of the sealing sheet according to each of the Examples other than Comparative Example 3, according to the method described in the above embodiment. The results are shown in Tables 2 to 5 below.

[Storage elastic modulus]

The storage elastic modulus value $G'_1$ at -20 °C and the storage elastic modulus value $G'_2$ at 23 °C were measured for the sealant layer of the sealing sheet according to each of the Examples other than Comparative Example 3, according to the method described in the above embodiment. The results are shown in Table 2 below. The calculated value of the ratio of T to $G'_1$ ($T / G'_1$) is also shown in Table 2 below. Further, for the sealing sheet including the adhesive layer (each of Examples 1 to 3 and 7), the ratio of $G'_2$ to the storage elastic modulus value at 23 °C of the adhesive layer is also shown in Tables 2 to 5 below. The storage elastic modulus at 23 °C of the adhesive layer was measured in the same manner as in the sealant layer.

[Adhesive strength]

The adhesive strength to the measurement tire was measured for the sealant layer of the sealing sheet according to each of the Examples other than Comparative Example 3, according to the method described in the above embodiment. For the adhesive strength of the sealant layer, the values at -20 °C (A2) and at 23°C (A1) were measured. For the sealing sheet including the adhesive layer (each of Examples 1 to 3 and 7), the adhesive strength of the adhesive layer to the tubeless tire was also measured. For the adhesive strength of the adhesive layer, the values at -20 °C (A2') and at 23 °C (A1') were measured. The results are shown in Tables 2 to 5 below.

[Evaluation of sealability]

The sealability when a through hole was formed in the pneumatic tire was evaluated using the sealing sheet according to each of the Examples. The sealability was evaluated according to the steps below. The sealability was evaluated in an environment at a temperature of 23 °C.

(1) The sealing sheet according to each of the Examples is cut out into a piece having a plane dimension of 30 mm × 50 mm to obtain a small piece of the sealing sheet, and then the small piece of the sealing sheet is attached to the inside of the measurement tire. When the small piece of the sealing sheet includes an adhesive layer, the small piece of the sealing sheet is attached to the inside of the measurement tire via the adhesive layer. When the small piece of the sealing sheet does not include an adhesive layer, the small piece of the sealing sheet is attached to the inside of the measurement tire via the sealant layer.

(2) The measurement tire with the small piece of the sealing sheet attached to the inside thereof is mounted to a wheel (trade name "WH-RS500" manufactured by SHIMANO INC., rim profile: 20.8 mm wide, 24 mm high). The measurement tire is mounted to the wheel without injecting a sealant inside the measurement tire.

(3) After air is injected to a specified pressure (95 psi (approx. 0.66 MPa)) inside the measurement tire, pressure change is observed over a certain period of time (about a day) to obtain the leak rate $V_1$ (psi/min) of the reference (Ref). That is, the leak rate when no through hole is formed in the measurement tire is obtained. The pressure is measured by attaching a pressure gauge (trade name "SHUTTLE GAUGE DIGITAL APG 01000" manufactured by TOPEAK) to a valve of the wheel. The pressure measurement is carried out in the state where an assembly of the measurement tire and the wheel stands still. The following pressure measurement is also carried out in the same manner as above.

(4) After air is injected again to a specified pressure (95 psi (approx. 0.66 MPa)) inside the measurement tire mounted to the wheel, a round nail having a thickness of 2.1 mm ($\varphi$ 2.1 mm) is stuck into a portion of the tire to which the small piece of the sealing sheet is attached, to a depth of 20 mm. Thereafter, the round nail is removed from the measurement tire to form a through hole in the measurement tire.

(5) Where the moment at which the through hole is formed (that is, the moment at which the round nail is removed) serves as a starting point of observation (0 min), pressure change is observed over a certain period of time (about 5 minutes) to obtain a leak rate $V_2$ (psi/min) after the through hole is formed. Next, a difference between the leak rate $V_2$ and the leak rate $V_1$ ($V_2 - V_1$) is calculated, and the calculated value (relative rate) is defined as a leak rate $V_3$. That is, the sealing sheet exhibits a better sealing effect as the leak rate V3 is closer to 0.

In consideration of the above, sealability was evaluated according to the following criteria.

Excellent: $0 \leq V_3 \leq 0.5$
Good: $0.50 < V_3 \leq 3.0$
Poor: $3.0 < V_3$

The values of the leak rate $V_3$ and the evaluation results of the sealability are shown in Tables 2 to 5 below.

[Evaluation of sticking property to R surface]

The sticking property to an R surface (curved surface) of the tire was evaluated using the sealing sheet according to each of the Examples.

(Evaluation steps)

A test sample having a plane dimension of 35 mm $\times$ 100 mm is cut out from the sealing sheet according to each of the Examples, and the test sample is attached to the inner surface of the measurement tire by applying a 5 kgf load thereto three times. When the sealing sheet including no substrate layer is evaluated, the load is applied through the release liner to the sealant layer (located between the release liner and the measurement tire). When the sealing sheet including the substrate layer is evaluated, the load is applied through the substrate layer to the sealant layer (located between the substrate layer and the tire).

(Evaluation criteria)

The evaluation is carried out according to the following evaluation criteria: Good (○): Area percentage of the sealing sheet that is separated and lifted from the R surface is less than 50%

Slightly poor (△): Area percentage of the sealing sheet that is lifted from the R surface is less than 50%, but the area on one side in one direction of a surface of the test sample is separated and lifted
Poor (✕): Area percentage of the sealing sheet that is separated and lifted from the R surface is 50% or more

[Evaluation of sealant protrusion amount]

The protrusion amount of the sealant (glue) was evaluated using the sealing sheet according to each of the Examples.

(Evaluation steps)

A square test sample having a plane dimension of 1 cm $\times$ 1 cm is cut out of the sealing sheet according to each of the Examples. The test sample is sandwiched between two release liners, and then further sandwiched between 3 mm thick SUS304 plates. A 200 gf load is applied from both sides of the two SUS 304 plates, which is in this state allowed to sit in an environment of 50 °C for three days. After the sitting, the length of a portion of the sealant that has most protruded from the original dimension (1 cm $\times$ 1 cm) is measured.

(Evaluation criteria)

The sealing sheet with the length of the protrusion being less than 1 mm is evaluated as the sealing sheet with the sealant suppressed from protruding.

[Evaluation of roll shape retainability]

The roll shape retainability was evaluated using the sealing sheet according to each of the Examples.

(Measurement of thickness tolerance / average thickness)

A first measurement point is selected in a lengthwise direction of the sealing sheet according to each of the Examples. Thicknesses are measured at intervals of 5 mm from one end to the other end of a width extending to include the first measurement point. Next, thicknesses are measured at intervals of 5 mm from one end to the other end of a width extending to include a second measurement point, which is 30 cm away in the lengthwise direction from the first measurement point. The average value, the maximum value, and the minimum value are calculated using all the measured thickness values. The calculated average value is defined as the "average thickness" (mm) of the sealing sheet, and the difference between the maximum value and the minimum value is defined as the "thickness tolerance" (mm). A 1/100 dial gauge is used for the measurements.

(Evaluation criteria)

The roll shape retainability is evaluated based on the protrusion amount obtained in the evaluation of the sealant protrusion amount, and the value calculated by the formula (thickness tolerance / average thickness), according to the following evaluation criteria: Good (○): Protrusion amount is less than 2 mm, and (thickness tolerance / average thickness) is less than 0.20

Slightly poor (△): Protrusion amount is less than 2mm, and (thickness tolerance / average thickness) is 0.20 or more and less than 0.35
Poor (×): Protrusion amount is 2 mm or more, or (thickness tolerance / average thickness) is 0.35 or more

Tables 2 to 5 below also show the thickness of the substrate layer, the mass of the substrate layer, the thickness of the sealant layer, the mass of the sealant layer, the thickness of the adhesive layer, the mass of the adhesive layer, and the total mass of the sealing sheet. The sealing sheet according to Example 8 includes the sealant layer made of two layers (first layer and second layer) with different compositions that are laminated on each other. In the column of Example 8 in Table 3, therefore, the thickness and the mass are shown for each of the layers and the total thickness and the total mass of the two layers are also shown.

Table 2

| Table 2 | Ex. 1 | Ex. 2 | Ex. 3 | Ex. 4 | Ex. 5 | Ex. 6 | Ex. 7 |
|---|---|---|---|---|---|---|---|
| Layer structure | Sealant layer (single layer) Adhesive layer | Substrate layer Sealant layer (single layer) Adhesive layer | Substrate layer Sealant layer (single layer) Adhesive layer | Substrate layer Sealant layer (single layer) | Substrate layer Sealant layer (single layer) | Substrate layer Sealant layer (single layer) | Sealant layer (single layer) Adhesive layer |
| Substrate layer thickness [$\mu$m] | - | 25 | 25 | 25 | 25 | 25 | - |
| Substrate layer mass [g/m$^2$] | - | 31 | 31 | 31 | 31 | 31 | - |
| Sealant layer thickness [mm] | 0.5 | 0.5 | 0.5 | 0.8 | 0.8 | 0.5 | 0.5 |
| Sealant layer mass [g/m$^2$] | 497 | 551 | 520 | 795 | 795 | 458 | 455 |
| Adhesive layer thickness [mm] | 0.1 | 0.1 | 0.1 | - | - | - | 0.1 |
| Adhesive layer mass [g/m$^2$] | 118 | 118 | 118 | - | - | - | 118 |
| Sealant layer probe tack value T (23 °C) [MPa] | 0.33 | 0.61 | 0.7 | 0.36 | 0.33 | 0.13 | 0.54 |
| Sealant layer storage elastic modulus $G'_1$ (-20 °C) [MPa] | 34.68 | 34.81 | 59.11 | 1.75 | 2.75 | 0.55 | 1.67 |

(continued)

| Table 2 | Ex. 1 | Ex. 2 | Ex. 3 | Ex. 4 | Ex. 5 | Ex. 6 | Ex. 7 |
|---|---|---|---|---|---|---|---|
| Layer structure | Sealant layer (single layer) Adhesive layer | Substrate layer Sealant layer (single layer) Adhesive layer | Substrate layer Sealant layer (single layer) Adhesive layer | Substrate layer Sealant layer (single layer) | Substrate layer Sealant layer (single layer) | Substrate layer Sealant layer (single layer) | Sealant layer (single layer) Adhesive layer |
| Sealant layer storage elastic modulus $G'_2$ (23 °C) [MPa] | 0.16 | 0.15 | 0.13 | 0.060 | 0.057 | 0.019 | 0.49 |
| Adhesive strength A2 of sealant layer to tire (-20 °C) [N/20mm] | 10.5 | 3.7 | 5.2 | 8.79 | 8.07 | 15 | 0 |
| Adhesive strength A1 of sealant layer to tire (23 °C) [N/20mm] | 3.4 | 6.3 | 13.5 | 8.79 | 8.02 | 23.8 | 0.05 |
| Adhesive strength A2' of adhesive layer to tire (-20 °C) [N/20mm] | 7.5 | 7.5 | 7.5 | - | | - | 7.5 |
| Adhesive strength A1' of adhesive layer to tire (23 °C) [N/20mm] | 25.1 | 25.1 | 25.1 | | | | 25.1 |
| $T / G'_1$ | 0.01 | 0.018 | 0.012 | 0.206 | 0.12 | 0.238 | 0.3241 |
| $(A1 \times T) / G'_1$ | 0.03 | 0.11 | 0.16 | 1.81 | 0.96 | 567 | 0.02 |
| $(A2 \times T) / G'_1$ | 0.1 | 0.06 | 0.06 | 1.81 | 0.97 | 3.57 | 0 |
| Thickness ratio (Sealant layer / Adhesive layer) | 5 | 5 | 5 | - | - | - | 5 |
| Mass ratio (Sealant layer / Adhesive layer) | 4.2 | 4.7 | 4.4 | - | - | - | 3.9 |
| Storage elastic modulus (23 °C) ratio (Sealant layer / Adhesive layer) | 4.1 | 3.8 | 3.3 | - | - | - | 12.2 |
| Sealing sheet thickness [mm] | 0.60 | 0.63 | 0.63 | 0.83 | 0.83 | 0.53 | 0.60 |

(continued)

| Table 2 | Ex. 1 | Ex. 2 | Ex. 3 | Ex. 4 | Ex. 5 | Ex. 6 | Ex. 7 |
|---|---|---|---|---|---|---|---|
| Layer structure | Sealant layer (single layer) Adhesive layer | Substrate layer Sealant layer (single layer) Adhesive layer | Substrate layer Sealant layer (single layer) Adhesive layer | Substrate layer Sealant layer (single layer) | Substrate layer Sealant layer (single layer) | Substrate layer Sealant layer (single layer) | Sealant layer (single layer) Adhesive layer |
| Total mass of sealing sheet [g/m$^2$] | 615 | 700 | 669 | 826 | 826 | 489 | 573 |
| Release liner | Double-side treated craft paper | Double-side treated craft paper | Double-side treated craft paper | Double-side treated craft paper | Double-side treated craft paper | Double-side treated craft paper | Double-side treated craft paper |
| Release liner thickness [mm] | 0.1 | 0.1 | 0.1 | 0.1 | 0.1 | 0.1 | 0.1 |
| Thickness ratio (Sealing sheet / Release liner) | 6.0 | 6.3 | 6.3 | 8.3 | 8.3 | 5.3 | 6.0 |
| Tensile modulus of release liner [MPa] | 1700 | 1700 | 1700 | 1700 | 1700 | 1700 | 1700 |
| Drv edge width [mm] | 2 | 2 | 2 | 2 | 2 | 2 | 2 |
| Sealability | Excellent | Excellent | Excellent | Excellent | Excellent | Good | Good |
| Leak rate $V_3$ [psi/min] | 0.2 | 0 | 0 | 0 | 0 | 1.3 | 2.9 |
| Sticking property to R surface | ○ | ○ | ○ | ○ | ○ | ○ | ○ |
| Sealant protrusion amount (mm) | <1 | <1 | <1 | <1 | <1 | <1 | <1 |
| Thickness tderance / Average thickness | 0.1 | 0.1 | 0.1 | 0.1 | 0.1 | 0.1 | 0.1 |
| Roll shape retainability | ○ | ○ | ○ | ○ | ○ | ○ | O |

Table 3

| Table 3 | Ex. 8 |
|---|---|
| Layer structure | Substrate layer |
| | Sealant layer (two-layer) |
| Substrate layer thickness [$\mu$m] | 25 |
| Substrate layer mass [g/m$^2$] | 31 |

(continued)

| Table 3 | | Ex. 8 |
|---|---|---|
| Sealant layer thickness [mm] | 1st layer | 0.15 |
| | 2nd layer | 0.8 |
| | Total thickness | 0.95 |
| Sealant layer mass [g/m$^2$] | 1st layer | 149 |
| | 2nd layer | 795 |
| | Total mass | 944 |
| Sealant layer probe tack value T (23 °C) [MPa] | 1st layer | 0.33 |
| | 2nd layer | 0.36 |
| Sealant layer storage elastic modulus G'$_1$ (-20 °C) [MPa] | 1st layer | 34.68 |
| | 2nd layer | 1.75 |
| Sealant layer storage elastic modulus G'$_2$ (23 °C) [MPa] | 1st layer | 0.16 |
| | 2nd layer | 0.06 |
| Adhesive strength A2 of sealant layer to tire (-20 °C) [N/20mm] | 1st layer | 10.5 |
| | 2nd layer | 8.8 |
| Adhesive strength A1 of sealant layer to tire (23 °C) [N/20mm] | 1st layer | 3.4 |
| | 2nd layer | 8.8 |
| T / G'$_1$ | 1st layer | 0.01 |
| | 2nd layer | 0.206 |
| (A1 × T) / G'$_1$ | 1st layer | 0.03 |
| | 2nd layer | 1.81 |
| (A2 × T) / G'$_1$ | 1st layer | 0.1 |
| | 2nd layer | 1.81 |
| Sealing sheet thickness [mm] | | 0.98 |
| Total mass of sealing sheet [g/m$^2$] | | 951 |
| Release liner | | Double-side treated craft paper |
| Release liner thickness [mm] | | 0.1 |
| Thickness ratio (Sealing sheet / Release liner) | | 9.8 |
| Tensile modulus of release liner [MPa] | | 1700 |
| Dry edge width [mm] | | 2 |
| Sealability | | Excellent |
| Leak rate V$_3$ [psi/min] | | 0 |
| Sticking property to R surface | | ○ |
| Sealant protrusion amount (mm) | | <1 |
| Thickness tolerance / Average thickness | | 0.1 |
| Roll shape retainability | | ○ |

Table 4

| Table 4 | Ex. 9 | Ex. 10 | Ex. 11 | Ex. 12 | Ex. 13 |
|---|---|---|---|---|---|
| Layer structure | Sealant layer (single layer) | Sealant layer (single layer) | Sealant layer (single layer) | Sealant layer (single layer) | Sealant layer (single layer) |
| Sealant layer thickness [mm] | 0.80 | 0.80 | 0.80 | 0.80 | 0.80 |
| Sealant layer mass [g/m²] | 795 | 795 | 795 | 795 | 795 |
| Sealant layer probe tack value T (23 °C) [MPa] | 0.36 | 0.36 | 0.36 | 0.36 | 0.36 |
| Sealant laver storage elastic modulus G', (-20 °C) [MPa] | 1.75 | 1.75 | 1.75 | 1.75 | 1.75 |
| Sealant layer storage elastic modulus G'$_2$ (23 °C) [MPa] | 0.06 | 0.06 | 0.06 | 0.06 | 0.06 |
| Adhesive strength A2 of sealant layer to tire (-20 °C) [N/20mm] | 8.79 | 8.79 | 8.79 | 8.79 | 8.79 |
| Adhesive strength A1 of sealant layer to tire (23 °C) [N/20mm] | 8.79 | 8.79 | 8.79 | 8.79 | 8.79 |
| T / G'$_1$ | 0.206 | 0.206 | 0.206 | 0.206 | 0.206 |
| (A1 × T) / G', | 1.81 | 1.81 | 1.81 | 1.81 | 1.81 |
| (A2 × T) / G', | 1.81 | 1.81 | 1.81 | 1.81 | 1.81 |
| Sealing sheet thickness [mm] | 0.80 | 0.80 | 0.80 | 0.80 | 0.80 |
| Total mass of sealing sheet [g/m²] | 795 | 795 | 795 | 795 | 795 |
| Release liner | Double-side treated craft paper | Double-side treated high quality paper | Double-side treated PET | Double-side treated craft paper | Double-side treated craft paper |
| Release liner thickness [mm] | 0.1 | 0.1 | 0.05 | 0.1 | 0.1 |
| Thickness ratio (Sealing sheet / Release liner) | 8.0 | 8.0 | 16.0 | 8.0 | 8.0 |
| Tensile modulus of release liner [MPa] | 1700 | 3600 | 4200 | 1700 | 1700 |
| Drv edae width [mm] | 2 | 2 | 2 | 2 | 2 |
| Sealability | Excellent | Excellent | Excellent | Excellent | Excellent |
| Leak rate V$_3$ [psi/min] | 0 | 0 | 0 | 0 | 0 |
| Sticking property to R surface | ○ | ○ | × | ○ | ○ |
| Sealant protrusion amount (mm) | <1 | <1 | <1 | <1 | <1 |
| Thickness tolerance / Average thickness | 0.1 | 0.1 | 0.1 | 0.25 | 0.4 |
| Roll shape retainability | ○ | ○ | ○ | Δ | × |

Table 5

| Table 5 | C. Ex. 1 | C. Ex. 2 | C. Ex. 3 |
|---|---|---|---|
| Layer structure | Substrate layer Sealant layer (single layer) | Substrate layer Sealant layer (single layer) | Substrate layer Sealant layer (single layer) Adhesive layer |
| Substrate layer thickness [μm] | 25 | 25 | 25 |
| Substrate layer mass [g/m$^2$] | 31 | 31 | 31 |
| Sealant layer thickness [mm] | 0.5 | 0.5 | 0.5 |
| Sealant layer mass [g/m$^2$] | 589 | 663 | 430 |
| Adhesive layer thickness [mm] | - | - | 0.1 |
| Adhesive layer mass [g/m$^2$] | - | - | 118 |
| Sealant layer probe tack value T (23 °C) [MPa] | 0.26 | 0.32 | 0.12 |
| Sealant layer storage elastic modulus G'$_1$ (-20 °C) [MPa] | 0.324 | 0.462 | 0.94 |
| Sealant layer storage elastic modulus G'$_2$ (23 °C) [MPa] | 0.0397 | 0.0563 | 0.323 |
| Adhesive strength A2 of sealant layer to tire (-20 °C) [N/20mm] | 7.5 | 5.7 | - |
| Adhesive strength A1 of sealant layer to tire (23 °C) [N/20mm] | 25.1 | 18.9 | - |
| Adhesive strength A2' of adhesive layer to tire (-20 °C) [N/20mm] | - | - | 7.5 |
| Adhesive strength A1' of adhesive layer to tire (23 °C) [N/20mm] | - | - | 25.1 |
| T / G'$_1$ | 0.803 | 0.6929 | 0.1277 |
| (A1 × T) / G'$_1$ | 20.16 | 13.1 | - |
| (A2 × T) / G'$_1$ | 6.02 | 3.95 | - |
| Thickness ratio (Sealant layer / Adhesive layer) | - | - | 5.0 |
| Mass ratio (Sealant layer / Adhesive layer) | - | - | 3.6 |
| Storage elastic modulus (23 °C) ratio (Sealant layer / Adhesive layer) | - | | |
| Total mass of sealing sheet [g/m$^2$] | 620 | 694 | 579 |
| Release liner | Double-side treated craft paper | Double-side treated craft paper | Double-side treated craft paper |
| Release liner thickness [mm] | 0.1 | 0.1 | 0.1 |
| Tensile modulus of release liner [MPa] | 1700 | 1700 | 1700 |
| Dry edge width [mm] | 2 | 2 | 2 |
| Sealability | Poor | Poor | Poor |
| Leak rate V$_3$ [psi/min] | 19.5 | 10.2 | 31.3 |
| Sticking property to R surface | ○ | ○ | ○ |
| Sealant protrusion amount (mm) | 4 | 2 | 2 |

(continued)

| Table 5 | C. Ex. 1 | C. Ex. 2 | C. Ex. 3 |
|---|---|---|---|
| Layer structure | Substrate layer Sealant layer (single layer) | Substrate layer Sealant layer (single layer) | Substrate layer Sealant layer (single layer) Adhesive layer |
| Thickness tolerance / Average thickness | 0.1 | 0.1 | 0.1 |
| Roll shape retainability | × | × | × |

It is seen from Tables 2 to 5 that, when the sealing sheet made of sealant composition according to each of the Examples is used , the leak rate $V_3$ is relatively small, and the sealability is favorably (excellent or good). It is also seen that, when the sealing sheet according to each of Examples 1 to 5 and 8 to 13 is used, the leak rate $V_3$ is particularly small and the sealability is particularly favorably evaluated (excellent). It is seen, in contrast, that, when the sealing sheet according to each of the Comparative Examples is used, the leak rate $V_3$ is large and the sealability is unfavorably evaluated (poor). The sealing sheet of Example 11 was evaluated as having a poor (×) sticking property to the R surface due to the high tensile modulus of the release liner, which caused poor workability of the attaching, but the attachability of the sealant layer itself was the same as that of Example 4.

REFERENCE SIGNS LIST

1: Sealant layer
2: Substrate layer
3: Adhesive layer
10: Pneumatic tire sealing sheet

## Claims

1. A pneumatic tire sealing sheet comprising a sealant layer, wherein

   when $G'_1$ represents a storage elastic modulus value at -20 °C of the sealant layer, T represents a probe tack value at 23 °C of the sealant layer, and A1 represents an adhesive strength value at 23 °C of the sealant layer to a tire, a ratio of a product of the probe tack value T and the adhesive strength value A1 to the storage elastic modulus value $G'_1$ ($A1 \times T / G'_1$) is 12.0 or less.

2. The pneumatic tire sealing sheet according to claim 1, wherein
   the storage elastic modulus value $G'_1$ is 0.50 MPa or more.

3. The pneumatic tire sealing sheet according to claim 1 or 2, wherein
   the probe tack value T is 0.05 MPa or more.

4. The pneumatic tire sealing sheet according to claim 1 or 2, wherein
   the sealant layer comprises, as an organic component, a thermoplastic elastomer.

5. The pneumatic tire sealing sheet according to claim 4, wherein
   the thermoplastic elastomer is a styrene-based thermoplastic elastomer.

6. The pneumatic tire sealing sheet according to claim 5, wherein
   the styrene-based thermoplastic elastomer has a diblock ratio of 10% or more and 80% or less.

7. The pneumatic tire sealing sheet according to claim 1 or 2, wherein
   the adhesive strength value A1 is 1.0 N/20 mm or more.

8. The pneumatic tire sealing sheet according to claim 1 or 2, wherein,

when A2 represents an adhesive strength value at -20 °C of the sealant layer to the tire,
the adhesive strength value A2 is 1.0 N/20 mm or more.

9. The pneumatic tire sealing sheet according to claim 1 or 2, wherein
the tire is a tubeless tire or a tubeless ready tire.

10. The pneumatic tire sealing sheet according to claim 1 or 2, comprising:
a substrate layer laminated on one surface of the sealant layer or disposed inside the sealant layer.

11. The pneumatic tire sealing sheet according to claim 1 or 2, wherein
the sealant layer is made of two or more kinds of layers having different compositions that are laminated on each other.

12. The pneumatic tire sealing sheet according to claim 10, wherein
the substrate layer is made of a sheet material selected from the group consisting of a fiber sheet, a foam sheet, a solid sheet, and a multilayer sheet formed by laminating at least any of two of these sheets.

13. The pneumatic tire sealing sheet according to claim 10,
having a mass per unit area of 1500 g/m$^2$ or less.

14. The pneumatic tire sealing sheet according to claim 10,

having a tape shape, and
having a width greater by 10% or more of a width of a pneumatic tire specified according to the ETRTO standard.

15. The pneumatic tire sealing sheet according to claim 14,

further comprising a release liner laminated on the sealant layer, wherein
the release liner is laminated on an opposite side to an adhesive side of the sealant layer to the tire.

16. The pneumatic tire sealing sheet according to claim 15, wherein
the release liner has a tensile modulus at 23 °C of 4000 MPa or less.

17. The pneumatic tire sealing sheet according to claim 15,

being wound into a roll shape to have the release liner arranged outside, wherein
a thickness tolerance of the sealant layer based on an average thickness of the sealant layer is 25% or less of the average thickness.

18. The pneumatic tire sealing sheet according to claim 17, wherein
the release liner has both end edges being dry edge parts on which no sealant layer is laminated.

19. The pneumatic tire sealing sheet according to claim 18, wherein
each of the dry edge parts has a width of 1 mm or more.

[Fig. 1]

10

2
1

[Fig. 2]

10

2

1

[Fig. 3]

10

2
1
3

[Fig. 4]

[Fig. 5]

[Fig. 6]

[Fig. 7A]

[Fig. 7B]

## INTERNATIONAL SEARCH REPORT

| International application No. |
|---|
| **PCT/JP2024/010150** |

**A. CLASSIFICATION OF SUBJECT MATTER**

*C09K 3/10*(2006.01)i; *B60C 1/00*(2006.01)i; *C08F 297/04*(2006.01)i
FI: C09K3/10 A; C08F297/04; B60C1/00 Z; C09K3/10 Z

According to International Patent Classification (IPC) or to both national classification and IPC

**B. FIELDS SEARCHED**

Minimum documentation searched (classification system followed by classification symbols)

C09K3/10; C08F; C08K; C08L

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/185354 A1 (ZUCCHINI INNOVAZIONE S.R.L.) 09 September 2022 (2022-09-09) examples, tables 1, 2, claims | 1-19 |
| A | JP 2011-502856 A (SOCIETE DE TECHNOLOGIE MICHELIN) 27 January 2011 (2011-01-27) claims | 1-19 |
| A | JP 2011-525435 A (SOCIETE DE TECHNOLOGIE MICHELIN) 22 September 2011 (2011-09-22) claims | 1-19 |
| A | JP 2012-533669 A (COMPAGNIE GENERALE DES ETABLISSEMENTS MICHELIN) 27 December 2012 (2012-12-27) claims | 1-19 |
| A | CN 112280233 A (SHANGHAI QINTIAN CULTURE TECHNOLOGY CO., LTD.) 29 January 2021 (2021-01-29) examples 1-3, claims | 1-19 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 May 2024** | **11 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
**Information on patent family members**

International application No.

**PCT/JP2024/010150**

| Patent document cited in search report | | | Publication date (day/month/year) | Patent family member(s) | | | Publication date (day/month/year) |
|---|---|---|---|---|---|---|---|
| WO | 2022/185354 | A1 | 09 September 2022 | JP | 2024-508783 | A | |
| | | | | EP | 4301589 | A1 | |
| | | | | CN | 117098649 | A | |
| | | | | KR | 10-2023-0154035 | A | |
| | | | | BR | 112023017048 | A | |
| JP | 2011-502856 | A | 27 January 2011 | US | 2011/0198009 | A1 | |
| | | | | claims | | | |
| | | | | WO | 2009/059709 | A1 | |
| | | | | EP | 2209608 | A1 | |
| | | | | FR | 2923409 | A1 | |
| | | | | CN | 101855065 | A | |
| | | | | EA | 201070586 | A | |
| | | | | AT | 536986 | T | |
| JP | 2011-525435 | A | 22 September 2011 | US | 2011/0165408 | A1 | |
| | | | | WO | 2009/156050 | A1 | |
| | | | | EP | 2303563 | A1 | |
| | | | | FR | 2932810 | A1 | |
| | | | | CN | 102066096 | A | |
| | | | | KR | 10-2011-0039279 | A | |
| JP | 2012-533669 | A | 27 December 2012 | US | 2012/0199260 | A1 | |
| | | | | WO | 2011/009909 | A1 | |
| | | | | EP | 2456626 | A1 | |
| | | | | FR | 2948321 | A1 | |
| | | | | CN | 102481815 | A | |
| CN | 112280233 | A | 29 January 2021 | (Family: none) | | | |

Form PCT/ISA/210 (patent family annex) (July 2022)

**EP 4 682 218 A1**

**Patent documents cited in the description**

- JP 2023042005 A
- US 20030136490 A